(19) Europäisches Patentamt
European Patent Office
Office européen des brevets

(11) EP 3 890 074 B1

# (12) EUROPEAN PATENT SPECIFICATION

(45) Date of publication and mention of the grant of the patent:
**04.02.2026 Bulletin 2026/06**

(21) Application number: **19908730.5**

(22) Date of filing: **03.12.2019**

(51) International Patent Classification (IPC):
***H01M 4/58*** *(2010.01)* ***H01M 4/587*** *(2010.01)*
***H01G 11/06*** *(2013.01)* ***H01G 11/42*** *(2013.01)*
***H01G 11/64*** *(2013.01)* ***H01M 10/0525*** *(2010.01)*
***H01M 10/0567*** *(2010.01)* ***H01M 10/058*** *(2010.01)*
***H01M 10/0568*** *(2010.01)*

(52) Cooperative Patent Classification (CPC):
**H01M 50/103; H01G 11/06; H01G 11/42; H01G 11/62; H01M 4/583; H01M 10/0525; H01M 10/0567; H01M 10/0568;** H01G 11/32; H01G 11/50; H01G 11/64; H01M 2220/20; H01M 2300/0017; Y02E 60/10; Y02P 70/50

(86) International application number:
**PCT/JP2019/047188**

(87) International publication number:
**WO 2020/144977 (16.07.2020 Gazette 2020/29)**

## (54) ENERGY STORAGE DEVICE AND METHOD FOR MANUFACTURING ENERGY STORAGE DEVICE

ENERGIESPEICHERVORRICHTUNG UND VERFAHREN ZUR HERSTELLUNG DER ENERGIESPEICHERVORRICHTUNG

APPAREIL DE STOCKAGE D’ÉNERGIE ET PROCÉDÉ DE FABRICATION D’APPAREIL DE STOCKAGE D’ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2019 JP 2019003000**

(43) Date of publication of application:
**06.10.2021 Bulletin 2021/40**

(73) Proprietor: **GS Yuasa International Ltd.**
**Kisshoin, Minami-ku,**
**Kyoto-shi, Kyoto 601-8520 (JP)**

(72) Inventors:
- **KAWAGUCHI, Kazuki**
  **Kyoto-shi, Kyoto 601-8520 (JP)**
- **OYAMA, Jun**
  **Kyoto-shi, Kyoto 601-8520 (JP)**
- **SEKIGUCHI, Taisei**
  **Kyoto-shi, Kyoto 601-8520 (JP)**
- **KAKO, Tomonori**
  **Kyoto-shi, Kyoto 601-8520 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**WO-A1-2017/221895**
**JP-A- 2002 042 868**
**JP-A- 2009 117 372**
**JP-A- 2014 194 930**
**JP-A- 2015 195 164**
**JP-A- 2017 016 945**
**JP-A- H11 171 519**
**KR-A- 20170 048 210**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- ZHANG LONGFEI ET AL: "Synergistic effect between lithium bis(fluorosulfonyl)imide (LiFSI) and lithium bis-oxalato borate (LiBOB) salts in LiPF6-based electrolyte for high-performance Li-ion batteries", ELECTROCHIMICA ACTA, ELSEVIER, AMSTERDAM, NL, vol. 127, 17 February 2014 (2014-02-17), pages 39 - 44, XP028847345, ISSN: 0013-4686, DOI: 10.1016/ J.ELECTACTA.2014.02.008
- ZHANG, LONGFEI ET AL.: "Synergistic effect between lithium bis(fluorosulfonyl)imide (LiFSI) and lithium bis-oxalato borate(LiBOB) salts in LiPF6-based electrolyte for high-performance Li-ion batteries", ELECTROCHIMICA ACTA, vol. 127, 17 February 2014 (2014-02-17), pages 39 - 44, XP028847345, DOI: 10.1016/ j.electacta.2014.02.008

## Description

TECHNICAL FIELD

The present invention relates to an energy storage device and a method for manufacturing the energy storage device.

BACKGROUND ART

Nonaqueous electrolyte secondary batteries typified by lithium ion nonaqueous electrolyte secondary batteries are widely in use for electronic equipment such as personal computers and communication terminals, automobiles, and the like because the batteries have high energy density. The nonaqueous electrolyte secondary battery is generally provided with an electrode assembly, having a pair of electrodes electrically isolated by a separator, and a nonaqueous electrolyte interposed between the electrodes and is configured to charge and discharge by transferring ions between both the electrodes. Capacitors such as lithium ion capacitors and electric double-layer capacitors are also widely in use as energy storage devices except for the nonaqueous electrolyte secondary batteries.

For the purpose of increasing the energy density of the energy storage device and improving the charge-discharge efficiency, a carbon material such as graphite has been used as the negative active material of the energy storage device (cf. Patent Document 1). Patent Document 2 discloses a lithium ion secondary battery wherein the negative electrode comprises artificial graphite particles as the main component. Further, an additive is generally added to an electrolyte solution so as to form a protective film on the negative electrode.

PRIOR ART DOCUMENT

PATENT DOCUMENT

Patent Document 1: JP-A-2005-222933
Patent Document 2: KR 2017 0048210 A

SUMMARY OF THE INVENTION

PROBLEMS TO BE SOLVED BY THE INVENTION

However, graphite is prone to non-uniform expansion and contraction during charge and discharge. Moreover, depending on the combination of the graphite and the additive in the electrolyte solution, a capacity retention rate after charge-discharge cycles may decrease.

An object of the present invention is to provide an energy storage device having an excellent capacity retention rate after charge-discharge cycles, even when graphite is used as a negative active material.

MEANS FOR SOLVING THE PROBLEMS

One aspect of the present invention made to solve the above problems is an energy storage device including: a negative electrode containing a negative active material; a positive electrode containing a positive active material; and a nonaqueous electrolyte. The negative active material contains solid graphite particles with an aspect ratio of 1 to 5 as a main component, and the nonaqueous electrolyte contains an imide salt containing phosphorus or sulfur.

Another aspect of the present invention is a method for manufacturing an energy storage device, the method including housing, in a case, a negative electrode that contains a negative active material having solid graphite particles with an aspect ratio of 1 to 5, a positive electrode containing a positive active material, and a nonaqueous electrolyte that contains an imide salt containing phosphorus or sulfur.

ADVANTAGES OF THE INVENTION

According to the present invention, it is possible to provide an energy storage device having an excellent capacity retention rate after the charge-discharge cycles, even when graphite is used as a negative active material, and a method for manufacturing the energy storage device.

BRIEF DESCRIPTION OF THE DRAWINGS

Fig. 1 is a schematic exploded perspective view illustrating an energy storage device in one embodiment of the present invention.

Fig. 2 is a schematic view illustrating an energy storage apparatus configured by aggregating a plurality of energy storage devices in one embodiment of the present invention.

MODE FOR CARRYING OUT THE INVENTION

One aspect of the present invention is an energy storage device including: a negative electrode containing a negative active material; a positive electrode containing a positive active material; and a nonaqueous electrolyte. The negative active material contains solid graphite particles with an aspect ratio of 1 to 5 as a main component, and the nonaqueous electrolyte contains an imide salt containing phosphorus or sulfur.

In the energy storage device, even when graphite is used as the negative active material, the capacity retention rate after charge-discharge cycles is excellent. The reason for this is unknown but is considered as follows. In the energy storage device, since the graphite containing the negative active material layer as a main component is solid, the density in the graphite particles is uniform, and the graphite particles are nearly spherical due to having an aspect ratio of 1 to 5, so that local current concentration is less likely to occur, and uneven expansion can thus be suppressed. With the graphite particles being nearly spherical, the directions of the graphite particles arranged in the active material layer tend to be random, that is, the orientation becomes low, uneven expansion can be suppressed. Further, the uneven expansion of the graphite particles can be suppressed, and since the graphite particles are close to the spherical, adjacent graphite particles are hardly caught by each other and slide with each other moderately, so that the amount of expansion and contraction as the whole negative electrode is relatively small. By the nonaqueous electrolyte containing the imide salt, when a protective film containing an N-P (nitrogen-phosphorus) bond or an N-S (nitrogen-sulfur) bond derived from the imide salt is formed on the surface of the negative active material, it is considered that solvent decomposition and further formation of the protective film on the surface of the negative active material are suppressed, and the capacity retention rate after the charge-discharge cycles is improved. However, the protective film derived from the imide salt containing phosphorus or sulfur has a moderately small strength and is easily broken due to the expansion of the negative electrode, and hence it is expected that the decrease in the capacity retention rate of the energy storage device may not be suppressed when the non-uniform expansion and contraction of the negative active material occur, or the amount of expansion and contraction of the negative active material layer as a whole is large. In the energy storage device, by combining the negative electrode containing the solid graphite particles with an aspect ratio of 1 to 5 and the imide salt containing phosphorus or sulfur as an additive for the nonaqueous electrolyte, the non-uniform expansion and contraction of the negative active material is suppressed, and the amount of expansion and contraction of the whole negative active material layer is reduced, so that the capacity retention rate after the charge-discharge cycles is estimated to be excellent.

Note that being "solid" means that the inside is clogged, and substantially no space exists. More specifically, in the present invention, being solid means that in a cross section of a particle observed in a scanning electron microscope (SEM) image by a scanning electron microscope, the area ratio excluding voids in the particle is 95% or more relative to the total area of the particle. The "main component" refers to a component having the highest content, for example, a component containing 50 mass% or more relative to the total mass of the negative active material. The "aspect ratio" means an A/B value that is the ratio of a longest diameter A of the particle to a diameter B which is the thickest portion in the direction perpendicular to the diameter A in the cross section of the particle observed in the SEM image by the scanning electron microscope.

The imide salt preferably has a phosphonyl group, a sulfonyl group, or a combination thereof. By the imide salt having a phosphonyl group, a sulfonyl group, or a combination thereof, the capacity retention rate after the charge-discharge cycles can be further improved.

A content of the imide salt in the nonaqueous electrolyte is preferably 1.0 mass% or more and 3.5 mass% or less. By the content of the imide salt being within the above range, the capacity retention rate after the charge-discharge cycles and the initial low-temperature input performance can be improved.

The nonaqueous electrolyte preferably further contains an oxalate complex salt. By the nonaqueous electrolyte further containing oxalate complex salt, the capacity retention rate after the charge-discharge cycles can be further improved. The reason for this is considered as follows. By the nonaqueous electrolyte containing the imide salt, when a protective film containing an N-P (nitrogen-phosphorus) bond or an N-S (nitrogen-sulfur) bond derived from the imide salt is formed on the surface of the negative active material, it is considered that solvent decomposition and further formation of the protective film on the negative active material are suppressed, and the capacity retention rate after the charge-discharge cycles is improved. By the nonaqueous electrolyte further containing an oxalate complex salt, when the imide

salt and the oxalate complex salt are used in combination, it is estimated that a structure derived from OOC-COO of the oxalate complex salt is incorporated into the protective film, thereby improving the flexibility of the protective film to make it easy to follow the expansion and contraction of the negative electrode, and the capacity retention rate after the charge-discharge cycles is further improved.

The oxalate complex salt preferably contains boron. By the oxalate complex salt containing boron, the capacity retention rate after the charge-discharge cycles and the initial low-temperature input performance can be further improved. The reason for this is considered as follows. As described above, by the nonaqueous electrolyte further containing the oxalate complex salt, when the imide salt and the oxalate complex salt are used in combination, a protective film containing N-P (nitrogen-phosphorus) bond or N-S (nitrogen-sulfur) bond derived from the imide salt and a structure derived from OOC-COO of the oxalate complex salt is formed on the surface of the negative active material. By moderate incorporation of boron, which is an element having high hardness, into the protective film, it is considered that the protective film has flexibility and is moderately strong, resulting in that the capacity retention rate after the charge-discharge cycles and the initial low-temperature input performance can be further improved.

The positive active material preferably contains lithium iron phosphate. By the positive active material containing lithium iron phosphate, the capacity retention rate after the charge-discharge cycles can be further improved. The reason for this is considered as follows. The imide salt contained in the nonaqueous electrolyte not only forms a protective film on the negative electrode surface but also forms a protective film on the positive active material because imide ions generated by itself or dissociation of Li ions adhere to the positive active material. LFP represented by $LiFePO_4$ has a lower positive electrode potential during charge and discharge than NCM, which is a lithium transition metal complex oxide represented by $LiNi_{1/3}Co_{1/3}Mn_{1/3}O_2$ or the like, so that the deterioration in the protective film is slower, and the positive electrode protective effect becomes longer. Therefore, by the positive active material containing lithium iron phosphate, it is estimated that the capacity retention rate after the charge-discharge cycles can be further improved.

Another aspect of the present invention is a method for manufacturing an energy storage device, the method including housing, in a case, a negative electrode that contains a negative active material having solid graphite particles with an aspect ratio of 1 to 5, a positive electrode containing a positive active material, and a nonaqueous electrolyte that contains an imide salt containing phosphorus or sulfur. According to the method for manufacturing the energy storage device, since the negative electrode having the solid graphite particles with an aspect ratio of 1 to 5 and the nonaqueous electrolyte that contains an imide salt containing phosphorus or sulfur are housed in the case, the energy storage device having an excellent capacity retention rate after the charge-discharge cycles can be manufactured.

Hereinafter, an energy storage device according to the present invention will be described in detail with reference to the drawings.

<Energy storage device>

[First embodiment]

Hereinafter, as an example of the energy storage device, a nonaqueous electrolyte energy storage device which is a secondary battery will be described. The nonaqueous electrolyte energy storage device includes an electrode assembly, a nonaqueous electrolyte, and a case for housing the electrode assembly and the nonaqueous electrolyte. The electrode assembly has a negative electrode and a positive electrode. The electrode assembly usually forms a wound electrode assembly in which a positive electrode and a negative electrode laminated via a separator are wound, or a laminated electrode in which a positive electrode and a negative electrode are alternately superimposed via a separator. The nonaqueous electrolyte is located in a gap between the separator, the positive electrode, and the negative electrode.

[Negative electrode]

The negative electrode has a negative electrode substrate and a negative active material layer.

(Negative electrode substrate)

The negative electrode substrate is a substrate having conductivity. As the material of the negative electrode substrate, a metal such as copper, nickel, stainless steel, or a nickel-plated steel or an alloy thereof is used, and copper or a copper alloy is preferable. Example of the form of the negative electrode substrate include a foil, and a vapor deposition film, and a foil is preferred from the viewpoint of cost. That is, the negative electrode substrate is preferably a copper foil. Examples of the copper foil include rolled copper foil, electrolytic copper foil, and the like. Note that having "conductivity" means that the volume resistivity measured in accordance with JIS-H-0505 (1975) is $1 \times 10^7\ \Omega \cdot cm$ or less, and "non-conductive" means that the volume resistivity is more than $1 \times 10^7\ \Omega \cdot cm$.

The upper limit of the average thickness of the negative electrode substrate may be, for example, 30 $\mu m$ but is

preferably 20 μm, and more preferably 10 μm. By setting the average thickness of the negative electrode substrate to be equal to or less than the upper limit, the energy density can be further increased. On the other hand, the lower limit of the average thickness may be, for example, 1 μm or 5 μm. Note that the average thickness is an average value of thicknesses measured at ten arbitrarily selected points.

[Negative active material layer]

The negative active material layer is disposed directly or via an intermediate layer along at least one surface of the negative electrode substrate. The negative active material layer is formed of a so-called negative composite containing a negative active material. The negative active material contains solid graphite particles having an aspect ratio of 1 to 5 as a main component. The negative composite contains optional components such as a conductive agent, a binder (binding agent), a thickener, a filler, or the like as necessary.

As the negative active material, a material capable of absorbing and releasing lithium ions is usually used. In the energy storage device according to the first embodiment of the present invention, the negative active material contains solid graphite particles as a main component. The negative composite may contain other negative active materials except for the solid graphite particles.

(Solid graphite particles)

The solid graphite particle means a graphite particle in which the inside of the particles is clogged, and substantially no void exists. As described above, in the present invention, the solid graphite particles mean graphite particles in which an area ratio R, excluding voids in the particles, is 95% or more relative to the total area of the particles in the cross section of the particles observed in a SEM image obtained by using a scanning electron microscope. The area ratio R can be determined as follows.

(1) Preparation of samples for measurement

The powder of the negative active material particles to be measured is fixed with a thermosetting resin. A cross-section polisher is used to expose the cross section of the negative active material particles fixed with resin to produce a sample for measurement.

(2) Acquisition of SEM image

For acquiring the SEM image, JSM-7001F (manufactured by JEOL Ltd.) is used as a scanning electron microscope. The condition for acquiring the SEM image is to observe a secondary electron image. An acceleration voltage is set to 15 kV. An observation magnification is set so that the number of negative active material particles appearing in one field of view is 3 or more and 15 or less. The obtained SEM image is stored as an image file. In addition, various conditions such as spot diameter, working distance, irradiation current, luminance, and focus are appropriately set so as to make the contour of the negative active material particle clear.

(3) Cutting of contour of negative active material particle

The contour of the negative active material particle is cut out from the acquired SEM image by using an image cutting function of an image editing software Adobe Photoshop Elements 11. The contour is cut out by using a quick selection tool to select the outside of the contour of the active material particle and edit a portion except for the negative active material particle to a black background. Then, binarization processing is performed on the images of all the negative active material particles from which the contours have been able to be cut out. At this time, when the number of the negative active material particles from which the contours have been able to be cut out is less than three, the SEM image is acquired again, and the contour of the negative active material particles is cut out until the number of the negative active material particles from which the contours have been able to be cut out becomes three or more.

(4) Binarization processing

The image of the first negative active material particle among the cut-out negative active material particles is binarized by using image analysis software PopImaging 6.00 to set to a threshold value a concentration 20% lower than a concentration at which the intensity becomes maximum. By the binarization processing, an area on the low-concentration side is calculated to obtain "an area S1 excluding voids in the particles".

Next, the image of the first negative active material particle is binarized using a concentration 10 as a threshold

value. The outer edge of the negative active material particle is determined by the binarization processing, and the area inside the outer edge is calculated to obtain an "area S0 of the whole particle".

By calculating S1 relative to S0 (S1/S0) by using S1 and S0 calculated above, "an area ratio R1 excluding voids in the particles relative to the area of the entire particle" in the first negative active material particle is calculated.

The images of the second and subsequent negative active material particles among the cut-out negative active material particles are also subjected to the binarization processing described above, and the areas S1 and S0 are calculated. Based on the calculated areas S1, S0, area ratios R2, R3,... of the respective negative active material particles are calculated.

(5) Determination of area ratio R

By calculating the average value of all the area ratios R1, R2, R3,... calculated by the binarization processing, "the area ratio R of the negative active material particles excluding voids in the particles relative to the total area of the particles" is determined.

The graphite is a carbon material in which an average lattice plane spacing d(002) of a (002) plane measured by an X-ray diffraction method in a discharge state is less than 0.340 nm. The solid graphite particles preferably have d(002) of less than 0.338 nm. The average lattice plane spacing d(002) of the solid graphite particles is preferably 0.335 nm or more. The solid graphite particle is preferably a spherical particle close to a true sphere but may have an elliptic shape, an oval shape, or the like and may have irregularities on the surface. The solid graphite particles may include particles in which a plurality of solid graphite particles are aggregated. Here, the "discharge state" refers to a state in which an open-circuit voltage is 0.7 V or more in a monopole energy storage device using a negative electrode, which contains a carbon material as a negative active material, as a working electrode and using a metal Li as a counter electrode. The potential of the metal Li counter electrode in the open-circuit state is substantially equal to the redox potential of Li, so that the open-circuit voltage in the energy storage device of the monopole electrode is substantially equal to the potential of the negative electrode relative to the redox potential of Li. In other words, that the open-circuit voltage in the monopole energy storage device is 0.7 V or more means that lithium ions capable of being occluded and released are sufficiently released from the carbon material contained as the negative active material in accordance with charge and discharge.

The lower limit of the aspect ratio of the solid graphite particles is 1.0 and is preferably 2.0. On the other hand, the upper limit of the aspect ratio of the solid graphite particles is 5.0 and is preferably 4.0. By setting the upper limit of the aspect ratio of the solid graphite particles within the above range, the graphite particles are close to spherical shape, and current concentration is less likely to occur, so that uneven expansion can be suppressed, and the capacity retention rate after the charge-discharge cycles can be improved. By setting the lower limit of the aspect ratio of the solid graphite particles within the above range, the graphite particles are close to a spherical shape, adjacent graphite particles are less likely to be caught by each other, and the graphite particles are moderately slidable with each other, so that the filling density of the electrode can be increased while the amount of expansion and contraction of the negative active material layer is reduced. By the nonaqueous electrolyte containing the imide salt, when a protective film containing an N-P (nitrogen-phosphorus) bond or an N-S (nitrogen-sulfur) bond derived from the imide salt is formed on the surface of the negative active material, it is considered that solvent decomposition and further formation of the protective film on the negative active material are suppressed, and the capacity retention rate after the charge-discharge cycles is improved. However, the protective film derived from the imide salt containing phosphorus or sulfur has a moderately small strength and is easily broken due to the expansion of the negative electrode, and hence it is expected that the decrease in the capacity retention rate of the energy storage device may not be suppressed when the non-uniform expansion and contraction of the negative active material occur, or the amount of expansion and contraction of the negative active material layer as a whole is large. In the energy storage device, by combining the negative electrode containing the solid graphite particles with an aspect ratio of 1 to 5 and the imide salt containing phosphorus or sulfur as an additive for the nonaqueous electrolyte, the non-uniform expansion and contraction of the negative active material is suppressed, and the amount of expansion and contraction of the whole negative active material layer is reduced, so that the capacity retention rate after the charge-discharge cycles is estimated to be excellent.

As described above, the "aspect ratio" means the A/B value that is the ratio of the longest diameter A of the particle to the longest diameter B in the direction perpendicular to the diameter A in the cross section of the particle observed in the SEM image by the scanning electron microscope. The aspect ratio can be determined as follows.

(1) Preparation of samples for measurement

A sample for measurement having an exposed cross section used for determining the area ratio R described above is used.

(2) Acquisition of SEM image

For acquiring the SEM image, JSM-7001F (manufactured by JEOL Ltd.) is used as a scanning electron microscope. The condition for acquiring the SEM image is to observe a secondary electron image. An acceleration voltage is set to 15 kV. An observation magnification is set so that the number of negative active material particles appearing in one field of view is 100 or more and 1000 or less. The obtained SEM image is stored as an image file. In addition, various conditions such as spot diameter, working distance, irradiation current, luminance, and focus are appropriately set so as to make the contour of the negative active material particle clear.

(3) Determination of aspect ratio

From the acquired SEM image, 100 negative active material particles are randomly selected, and for each of the particles, the longest diameter A of the negative active material particle and the longest diameter B in the direction perpendicular to the diameter A are measured to calculate the A/B value. The average value of all the calculated A/B values is calculated to determine the aspect ratio of the negative active material particles.
The median diameter of each of the solid graphite particles is not particularly limited, but from the viewpoint of improving the output of the energy storage device, the upper limit value is preferably 15 μm, more preferably 12 μm, and still more preferably 5 μm. From the viewpoint of ease of handling in manufacturing or manufacturing cost, the lower limit value is preferably 1 μm and more preferably 2 μm.
Note that the "median diameter" means a value (D50) at which the volume-based integrated distribution calculated in accordance with JIS-Z-8819-2 (2001) becomes 50 %. Specifically, the measured value can be obtained by the following method. A laser diffraction type particle size distribution measuring apparatus ("SALD-2200" manufactured by Shimadzu Corporation) is used as a measuring apparatus, and Wing SALD-2200 is used as measurement control software. A scattering measurement mode is adopted, and a wet cell, in which a dispersion liquid with a measurement sample dispersed in a dispersion solvent circulates, is irradiated with a laser beam to obtain a scattered light distribution from the measurement sample. The scattered light distribution is approximated by a log-normal distribution, and a particle size corresponding to an accumulation degree of 50% is defined as a median diameter (D50).
The lower limit of the content of the solid graphite particles relative to the total mass of the negative active material is preferably 60 mass% and more preferably 80 mass%. By setting the content of the solid graphite particles to the above lower limit or more, the capacity density of the energy storage device can be further increased. On the other hand, the upper limit of the content of the solid graphite particles relative to the total mass of the negative active material may be, for example, 100 mass%.

(Other negative active materials)

Examples of other negative active materials that may be contained in addition to the solid graphite particles include non-graphitizable carbon, graphitizable carbon, hollow graphite particles, metals such as Si and Sn, oxides of these metals, or a composite of these metals, and a carbon material.

(Other optional components)

The solid graphite particles have conductivity, and examples of the conductive agent include a carbon material except for graphite, such as metal, conductive ceramics, and acetylene black.
Examples of the binder include: elastomer such as ethylene-propylene-diene rubber (EPDM), sulfonated EPDM, styrene-butadiene rubber (SBR), and fluororubber; and thermoplastic resins except for the elastomers, such as fluororesins (polytetrafluoroethylene (PTFE), polyvinylidene fluoride (PVDF), etc.), polyethylene, polypropylene, and polyimide; polysaccharide polymers.
Examples of the thickener include polysaccharide polymers such as carboxymethyl cellulose (CMC) and methyl cellulose. When the thickener has a functional group that reacts with lithium, it is preferable to inactivate the functional group by methylation or the like in advance.
The filler is not particularly limited. The main components of the filler include polyolefins such as polypropylene and polyethylene, silica, alumina, zeolite, and glass.
The negative composite may be a negative composite paste containing a dispersion medium in addition to the optional components described above. As the dispersion medium, it is possible to use, for example, an aqueous solvent such as water or a mixed solvent mainly composed of water or an organic solvent such as N-methylpyrrolidone or toluene.

(Intermediate layer)

The intermediate layer is a coating layer on the surface of the negative electrode substrate, and contains conductive particles such as carbon particles to reduce contact resistance between the negative electrode substrate and the negative composite layer. The configuration of the intermediate layer is not particularly limited but can be formed of, for example, a composition containing a resin binder and conductive particles.

[Nonaqueous Electrolyte]

The nonaqueous electrolyte contains an imide salt containing phosphorus or sulfur. The nonaqueous electrolyte contains a nonaqueous solvent and an electrolyte salt dissolved in the nonaqueous solvent.

(Nonaqueous solvent)

As the nonaqueous solvent, it is possible to use a known nonaqueous solvent usually used as a nonaqueous solvent of a general nonaqueous electrolyte for an energy storage device. Examples of the nonaqueous solvent include cyclic carbonate, chain carbonate, ester, ether, amide, sulfone, lactone, and nitrile. Among these, it is preferable to use at least the cyclic carbonate or the chain carbonate, and it is more preferable use the cyclic carbonate and the chain carbonate in combination. When the cyclic carbonate and the chain carbonate are used in combination, the volume ratio of the cyclic carbonate to the chain carbonate (cyclic carbonate: chain carbonate) is not particularly limited but is preferably from 5: 95 to 50: 50, for example.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, catechol carbonate, 1-phenylvinylene carbonate, and 1,2-diphenylvinylene carbonate, and among these, EC is preferable.

Examples of the chain carbonate include diethyl carbonate (DEC), dimethyl carbonate (DMC), ethyl methyl carbonate (EMC), and diphenyl carbonate, and among these, EMC is preferable.

(Electrolyte salt)

As the electrolyte salt, it is possible to use a known electrolyte salt usually used as an electrolyte salt of a general nonaqueous electrolyte for an energy storage device. Examples of the electrolyte salt include a lithium salt, a sodium salt, a potassium salt, a magnesium salt, and an onium salt, but a lithium salt is preferable.

Examples of the lithium salt include inorganic lithium salts, such as $LiPF_6$, $LiPO_2F_2$, $LiBF_4$, and $LiClO_4$, and lithium salts having a hydrocarbon group with a hydrogen substituted by fluorine, such as $LiSO_3CF_3$, $LiC(SO_2CF_3)_3$, and $LiC(SO_2C_2F_5)_3$ Among these, an inorganic lithium salt is preferable, and $LiPF_6$ is more preferable.

The lower limit of the content of the electrolyte salt in the nonaqueous solution is preferably 0.1 M, more preferably 0.3 M, still more preferably 0.5 M, and particularly preferably 0.7 M. On the other hand, the upper limit is not particularly limited but is preferably 2.5 M, more preferably 2 M, and still more preferably 1.5 M. The nonaqueous solution means a state in which the electrolyte salt is dissolved in the nonaqueous solvent and means a state before the imide salt and the oxalate complex salt are dissolved.

(Imide salt containing phosphorus or sulfur)

The nonaqueous electrolyte of the energy storage device contains an imide salt containing phosphorus or sulfur. By the nonaqueous electrolyte containing the imide salt that contains phosphorus or sulfur, the energy storage device has an excellent capacity retention rate after the charge-discharge cycles. The imide salt preferably has a phosphonyl group, a sulfonyl group, or a combination thereof. By the imide salt having a phosphonyl group, a sulfonyl group, or a combination thereof, the capacity retention rate after the charge-discharge cycles can be further improved. The phosphonyl group means a "$POX_2$-" group (X is a hydrogen, a halogen, a hydrocarbon group, or a hydrocarbon group partially or wholly substituted by a halogen). The sulfonyl group means a "$SO_2X$-" group (X is a hydrogen, a halogen, a hydrocarbon group, or a hydrocarbon group partially or wholly substituted by a halogen).

Examples of the imide salt containing phosphorus or sulfur include lithium (difluorophosphonyl) fluorosulfonylimide (LIFSPI) represented by formula (1), lithium bis(fluorosulfonyl) imide (LIFSI) represented by formula (2), and lithium bis(trifluoromethanesulfonyl) imide (LITFSI) represented by formula (3).

[Chemical Formula 1]

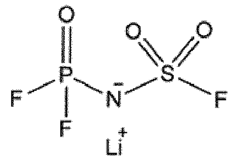

(1)

[Chemical Formula 2]

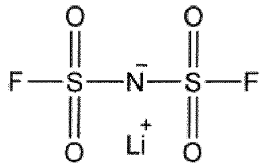

(2)

[Chemical Formula 3]

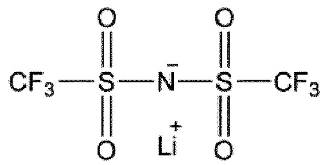

(3)

The lower limit of the content of the imide salt containing phosphorus or sulfur in the nonaqueous electrolyte is preferably 0.1 mass%, more preferably 0.5 mass%, and still more preferably 1.0 mass%. On the other hand, the upper limit of the content may be 10.0 mass%, and is preferably 5.0 mass%, more preferably 4.0 mass%, and still more preferably 3.5 mass%. The content of the imide salt containing phosphorus or sulfur in the nonaqueous electrolyte is within the above range, so that the capacity retention rate after the charge-discharge cycles and the initial low-temperature input performance can be further improved. Here, the content of the imide salt means the mass of the imide salt relative to the mass of the nonaqueous solution. When a plurality of types of imide salts are included, the content of the imide salt means the total mass of the plurality of imide salts relative to the mass of the nonaqueous solution.

(Oxalate complex salt)

The nonaqueous electrolyte of the energy storage device preferably further contains an oxalate complex salt. The oxalate complex salt is a salt that contains a complex ion having an oxalate ligand. By the nonaqueous electrolyte further containing oxalate complex salt, the capacity retention rate after the charge-discharge cycles can be further improved. By the nonaqueous electrolyte containing the imide salt, when a protective film containing an N-P (nitrogen-phosphorus) bond or an N-S (nitrogen-sulfur) bond derived from the imide salt is formed on the surface of the negative active material, it is considered that solvent decomposition and further formation of the protective film on the negative active material are suppressed, and the capacity retention rate after the charge-discharge cycles is improved. By the nonaqueous electrolyte further containing an oxalate complex salt, when the imide salt and the oxalate complex salt are used in combination, it is estimated that a structure derived from OOC-COO of the oxalate complex salt is incorporated into the protective film, thereby improving the flexibility of the protective film to make it easy to follow the expansion and contraction of the negative electrode, and the capacity retention rate after the charge-discharge cycles is further improved.

Examples of the oxalate complex salt include lithium difluorooxalate borate (LIFOB) represented by formula (4), lithium bisoxalate borate (LIBOB) represented by formula (5), lithium tetrafluorooxalate phosphate ($LIPF_4$ (Ox) represented by formula (6), and lithium difluorobisoxalate phosphate represented by formula (7). The oxalate complex salt preferably contains boron, such as LIFOB and LIBOB, from the viewpoint of improving not only the capacity retention rate after the charge-discharge cycles but also the initial low-temperature input performance. The reason for this is considered as follows. As described above, by the nonaqueous electrolyte further containing the oxalate complex salt, when the imide salt and the oxalate complex salt are used in combination, a protective film containing N-P (nitrogen-phosphorus) bond or N-S (nitrogen-sulfur) bond derived from the imide salt and a structure derived from OOC-COO of the oxalate complex salt is formed on the surface of the negative active material. It is considered that by boron, which is a high hardness element,

being moderately incorporated into the protective film, the protective film has flexibility and is moderately strong, so that not only the capacity retention rate after charge-discharge cycles but also initial low-temperature input performance can be further improved.

[Chemical Formula 4]

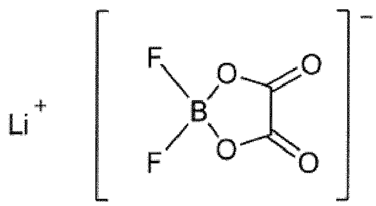

(4)

[Chemical Formula 5]

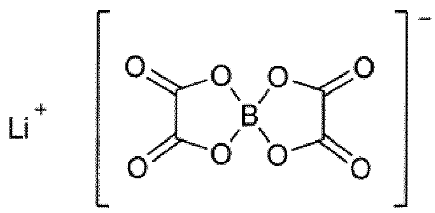

(5)

[Chemical Formula 6]

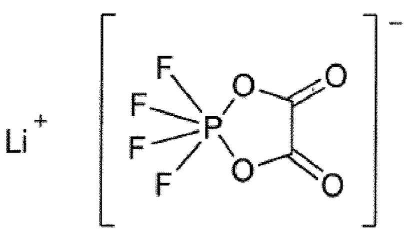

(6)

[Chemical Formula 7]

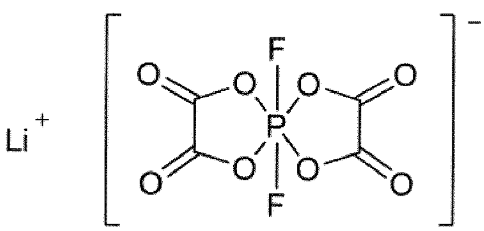

(7)

The lower limit of the content of the oxalate complex salt in the nonaqueous electrolyte is preferably 0.05 mass%,

more preferably 0.10 mass%, and still more preferably 0.30 mass%. On the other hand, the upper limit of the content may be 3.00 mass%, and is preferably 1.50 mass%, more preferably 1.20 mass%, and still more preferably 1.00 mass%. By the upper limit of the content of the oxalate complex salt being within the above range, the capacity retention rate after charge-discharge cycles and the initial low-temperature input performance can be further improved. Here, the content of the oxalate complex salt means the mass of the oxalate complex salt relative to the mass of the nonaqueous solution. When a plurality of types of oxalate complex salts are contained, the content of the oxalate complex salt means the total mass of the plurality of oxalate complex salts relative to the mass of the nonaqueous solution.

The nonaqueous electrolyte may contain other components in addition to the nonaqueous solvent, the electrolyte salt, an imide salt containing phosphorus or sulfur, and an oxalate complex salt as an optional component, so long as the effect of the present invention is not inhibited. Examples of the other components include various additives contained in a nonaqueous electrolyte of a general energy storage device. However, the content of each of these other components is preferably 5 mass% or less, and more preferably 1 mass% or less.

The nonaqueous electrolyte can be obtained by dissolving the electrolyte salt, an imide salt containing phosphorus or sulfur, and the optional component such as the oxalate complex salt into the nonaqueous solvent.

[Positive electrode]

The positive electrode has a positive electrode substrate and a positive active material layer. The positive active material layer contains a positive active material and is disposed directly or via an intermediate layer along at least one surface of the positive electrode substrate.

The positive electrode substrate has conductivity. As the material of the substrate, a metal such as aluminum, titanium, tantalum, stainless steel, or an alloy thereof is used. Among these, aluminum and aluminum alloys are preferable from the viewpoint of the balance of electric potential resistance, high conductivity, and cost. Example of the form of the positive electrode substrate include a foil and a vapor deposition film, and a foil is preferred from the viewpoint of cost. That is, the positive electrode substrate is preferably an aluminum foil. Note that examples of the aluminum or aluminum alloy include A1085P, A3003P, and the like specified in JIS-H-4000 (2014).

The positive active material layer is formed of a so-called positive composite containing a positive active material. The positive composite forming the positive active material layer contains optional components such as a conductive agent, a binder (binding agent), a thickener, a filler, or the like as necessary.

Examples of the positive active material include a lithium metal composite oxide and a polyanion compound. Examples of the lithium metal composite oxide include $Li_xMO_y$ (M represents at least one transition metal) and specifically include $Li_xCoO_2$, $Li_xNiO_2$, $Li_xMnO_3$, $Li_xNi_\alpha Co_{(1-\alpha)}O_2$, $Li_xNi_\alpha Mn_\beta Co_{(1-\alpha-\beta)}O_2$ ($LiNi_{1/3}Co_{1/3}Mn_{1/3}O_2$), and the like having a layered $\alpha$-$NaFeO_2$-type crystal structure, and $Li_xMn_2O_4$, $Li_xNi_\alpha Mn_{(2-\alpha)}O_4$, and the like having a spinel-type crystal structure. Examples of the polyanionic compound include $Li_wMe_x(XO_y)_z$ (Me represents at least one transition metal, and X represents, for example, P, Si, B, V, etc.), and specifically include $LiFePO_4$, $LiMnPO_4$, $LiNiPO_4$, $LiCoPO_4$, $LisV_2(PO_4)_3$, $Li_2MnSiO_4$, and $Li_2CoPO_4F$ Among these, the positive active material preferably contains lithium iron phosphate ($LiFePO_4$). The imide salt contained in the nonaqueous electrolyte not only forms a protective film on the negative electrode surface but also forms a protective film on the positive active material because imide ions generated by itself or dissociation of Li ions adhere to the positive active material. LFP represented by $LiFePO_4$ has a lower positive electrode potential during charge and discharge than NCM, which is a lithium transition metal complex oxide represented by $LiNi_{1/3}Co_{1/3}Mn_{1/3}O_2$ or the like, so that the deterioration in the protective film is slower, and the positive electrode protective effect becomes longer. Hence it is considered that the energy storage device can further improve the capacity retention rate after the charge-discharge cycles by containing lithium iron phosphate among these as the positive active material.

The element or polyanion in these compounds may be partially substituted by another element or anion species. In the positive active material layer, one of these compounds may be used alone, or two or more compounds may be mixed.

The conductive agent is not particularly limited so long as being a conductive material. Examples of such a conductive agent include natural or artificial solid graphite particles, carbon black such as furnace black, acetylene black, and ketjen black, metals, and conductive ceramics. Examples of the shape of the conductive agent include a powder shape and a fibrous shape.

Examples of the binder (binding agent) include: thermoplastic resins such as fluororesin (polytetrafluoroethylene (PTFE), polyvinylidene fluoride (PVDF), etc.), polyethylene, polypropylene, and polyimide; elastomers such as ethylene-propylene-diene rubber (EPDM), sulfonated EPDM, styrene-butadiene rubber (SBR), and fluororubber; and polysaccharide polymers.

Examples of the thickener include polysaccharide polymers such as carboxymethyl cellulose (CMC) and methyl cellulose. When the thickener has a functional group that reacts with lithium, it is preferable to inactivate the functional group by methylation or the like in advance.

The filler is not particularly limited. The main components of the filler include polyolefins such as polypropylene and polyethylene, silica, alumina, zeolite, glass, and carbon.

The intermediate layer is a coating layer on the surface of the positive electrode substrate, and contains conductive particles such as carbon particles to reduce contact resistance between the positive electrode substrate and the positive active material layer. Similarly to the negative electrode, the configuration of the intermediate layer is not particularly limited but can be formed of, for example, a composition containing a resin binder and conductive particles.

[Separator]

As the separator, for example, a woven fabric, a nonwoven fabric, a porous resin film, or the like is used. Among these, a porous resin film is preferable from the viewpoint of strength, and a nonwoven fabric is preferable from the viewpoint of liquid retention of the nonaqueous electrolyte. The main component of the separator is preferably, for example, a polyolefin such as polyethylene or polypropylene from the viewpoint of strength, and is preferably, for example, a polyimide or aramid from the viewpoint of oxidation decomposition resistance. These resins may be combined.

Note that an inorganic layer may be disposed between the separator and the electrode (usually, the positive electrode). The inorganic layer is a porous layer also called a heat resistant layer or the like. A separator having an inorganic layer formed on one surface of the porous resin film can also be used. The inorganic layer is usually made up of inorganic particles and a binder and may contain other components.

[Specific configuration of energy storage device]

Next, a specific configuration example of an energy storage device according to one embodiment of the present invention will be described. Fig. 1 is a schematic exploded perspective view illustrating an electrode assembly and a case of a nonaqueous electrolyte energy storage device which is an energy storage device according to one embodiment of the present invention. A nonaqueous electrolyte energy storage device 1 includes an electrode assembly 2, a positive current collector 4' and a negative current collector 5', which are connected to both ends of the electrode assembly 2, respectively, and a case 3 for housing the current collectors. In the nonaqueous electrolyte energy storage device 1, the electrode assembly 2 is housed in the case 3, and the nonaqueous electrolyte is disposed in the case 3. The electrode assembly 2 is formed by winding a positive electrode provided with a positive active material and a negative electrode provided with a negative active material in a flat shape via a separator. In the present embodiment, a winding-axis direction of the electrode assembly 2 is defined as a Z-axis direction, and a long-axis direction in a cross section perpendicular to the Z-axis of the electrode assembly 2 is defined as an X-axis direction. The direction perpendicular to the Z-axis and the X-axis is defined as a Y-axis direction.

An exposed region of the positive electrode substrate in which the positive active material layer is not formed is formed at the end of the positive electrode in one direction. An exposed region of the negative electrode substrate in which the negative active material layer is not formed is formed at the end of the negative electrode in one direction. The positive current collector 4' is electrically connected to the exposed region of the positive electrode substrate by clamping with a clip, welding, or the like, and the negative current collector 5' is similarly electrically connected to the exposed region of the negative electrode substrate. The positive electrode is electrically connected to the positive electrode terminal 4 via the positive current collector 4', and the negative electrode is electrically connected to the negative electrode terminal 5 via the negative current collector 5'.

(Case)

The case 3 is a rectangular parallelepiped housing that houses the electrode assembly 2, the positive current collector 4', and the negative current collector 5', and in which one surface (upper surface) perpendicular to the second direction (X direction) is opened. Specifically, the case 3 has a bottom surface, a pair of long side surfaces facing in the third direction (Y direction), and a pair of short-side surfaces facing in the first direction (Z direction). The inner surface of the case 3 directly contacts the outer surface of the electrode assembly 2 (usually, the separator). The case 3 may include a spacer, a sheet, or the like interposed between the case 3 and the electrode assembly 2. The material of the spacer, the sheet, or the like is not particularly limited so long as having an insulating property. When the case 3 includes a spacer, a sheet, or the like, the inner surface of the case 3 indirectly contacts the outer surface of the electrode assembly 2 via the spacer, the sheet, or the like.

The upper surface of the case 3 is covered with a lid 6. The case 3 and the lid 6 are made of a metal plate. As the material of the metal plate, for example, aluminum can be used.

The lid 6 is provided with a positive electrode terminal 4 and a negative electrode terminal 5 that conduct electricity to the outside. The positive electrode terminal 4 is connected to the positive current collector 4', and the negative electrode terminal 5 is connected to the negative current collector 5'. Further, when the energy storage device is a nonaqueous electrolyte energy storage device, a nonaqueous electrolyte (electrolyte solution) is injected into the case 3 through an injection hole (not illustrated) provided in the lid 6.

In the energy storage device, even when graphite is used as the negative active material, the capacity retention rate after charge-discharge cycles is excellent.

<Method for manufacturing energy storage device>

A method for manufacturing an energy storage device according to one embodiment of the present invention includes housing, into a case, a negative electrode that contains a negative active material having solid graphite particles with an aspect ratio of 1 to 5, a positive electrode containing a positive active material, and a nonaqueous electrolyte that contains an imide salt containing phosphorus or sulfur.

As described above, the negative active material contains solid graphite particles having an aspect ratio of 1 to 5.

The method for manufacturing an energy storage device according to one embodiment of the present invention includes, as another step, laminating the negative electrode and the positive electrode via a separator, for example. An electrode assembly is formed by laminating the negative electrode and the positive electrode via the separator.

A method for housing the negative electrode, the positive electrode, the nonaqueous electrolyte, and the like into the case can be performed in accordance with a known method. After the housing, the opening for the housing is sealed to obtain a nonaqueous electrolyte energy storage device. The details of each element constituting the nonaqueous electrolyte energy storage device obtained by the manufacturing method are as described above.

According to the method for manufacturing the energy storage device, since the negative electrode that contains a negative active material having the solid graphite particles with an aspect ratio of 1 to 5 and the nonaqueous electrolyte that contains an imide salt containing phosphorus or sulfur are accommodated in the case, the energy storage device having an excellent capacity retention rate after the charge-discharge cycles can be manufactured.

[Other embodiments]

The energy storage device of the present invention is not limited to the above-described embodiment.

In the above embodiment, the energy storage device is a nonaqueous electrolyte secondary battery, but other energy storage devices may be used. Examples of the other energy storage devices include capacitors (electric double-layer capacitor, lithium ion capacitor). Examples of the nonaqueous electrolyte secondary battery include a lithium ion nonaqueous electrolyte secondary battery.

Although the wound electrode assembly has been used in the above embodiment, a laminated electrode assembly may be provided which is formed of a separator where a plurality of sheet bodies having a positive electrode, a negative electrode, and a separator are laminated.

The present invention can also be realized as an energy storage apparatus including a plurality of the energy storage devices. An assembled battery can be constituted using one or a plurality of energy storage devices (cells) of the present invention, and an energy storage apparatus can be constituted using the assembled battery. The energy storage apparatus can be used as a power source for an automobile, such as an electric vehicle (EV), a hybrid vehicle (HEV), or a plug-in hybrid vehicle (PHEV). Further, the energy storage apparatus can be used for various power supply apparatuses such as an engine starting power supply apparatus, an auxiliary power supply apparatus, and an uninterruptible power system (UPS).

Fig. 2 illustrates an example of an energy storage apparatus 30 formed by assembling energy storage units 20 in each of which two or more electrically connected energy storage devices 1 are assembled. The energy storage apparatus 30 may include a busbar (not illustrated) for electrically connecting two or more energy storage devices 1 and a busbar (not illustrated) for electrically connecting two or more energy storage units 20. The energy storage unit 20 or the energy storage apparatus 30 may include a state monitor (not illustrated) for monitoring the state of one or more energy storage devices.

EXAMPLES

Hereinafter, the present invention will be described more specifically by way of examples, but the present invention is not limited to the following examples.

[Examples 1 to 295 and Comparative Examples 1 to 8]

(Negative Electrode)

A coating solution (negative composite paste), containing a negative active material made of graphite having each of structures shown in Tables 1 to 12, styrene-butadiene rubber as a binder, and carboxymethyl cellulose as a thickener and using water as a dispersion medium, was prepared. A mass ratio of the negative active material, the binder,

and the thickener was 96: 3: 1. The coating solution was applied to both surfaces of a copper foil substrate having a thickness of 8 μm and dried to form a negative active material layer, thereby obtaining negative electrodes of Examples and Comparative Examples. Physical property values of the negative active materials are shown in Tables 1 to 12. The coating amount of the negative composite (obtained by evaporating the dispersion medium from the negative composite paste) per unit area of one surface after drying was set at 5.8 mg/cm$^2$ for an energy storage device using LFP ($LiFePO_4$) as the positive active material and at 5.4 mg/cm$^2$ for an energy storage device using NCM ($LiNi_{1/3}Co_{1/3}Mn_{1/3}O_2$, $LiNi_{0.6}Co_{0.2}Mn_{0.2}O_2$, or $LiNi_{0.5}Co_{0.2}Mn_{0.3}O_2$) as the positive active material.

(Nonaqueous Electrolyte)

$LiPF_6$ (1.2 mol/L), an imide salt containing phosphorus or sulfur in the content shown in Tables 1 to 12 (content per mass of a nonaqueous solution), and an oxalate complex salt in the content shown in Tables 1 to 12 were dissolved into a nonaqueous solvent prepared by mixing ethylene carbonate (EC), dimethyl carbonate (DMC), and ethyl methyl carbonate (EMC) in a volume ratio of EC:DMC:EMC = 30:35:35 to obtain a nonaqueous electrolyte. As the imide salt containing phosphorus or sulfur, compound 1 (lithium (difluorophosphonyl) fluorosulfonylimide: LIFSPI) compound 2 (lithium bis(fluorosulfonyl) imide: LIFSI), and compound 3 (lithium bis(trifluoromethanesulfonyl) imide: LITFSI were used. As the oxalate complex salt, compound 4 (lithium difluorooxalate borate: LIFOB), compound 5 (lithium bisoxalate borate: LIBOB), and compound 6 (lithium tetrafluorooxalate phosphate: $LIPF_4$ (Ox)) were used.

(Positive electrode)

A positive electrode was produced using LFP($LiFePO_4$ or NCM ($LiNi_{1/3}Co_{1/3}Mn_{1/3}O_2$, $LiNi_{0.6}Co_{0.2}Mn_{0.2}O_2$, or $LiNi_{0.5}Co_{0.2}Mn_{0.3}O_2$) as a positive active material. The positive electrode contains the positive active material, polyvinylidene fluoride (PVDF) as a binder, and acetylene black as a conductive agent, and a coating liquid (positive composite paste) was prepared using n-methyl-2-pyrrolidone (NMP) as a dispersion medium. The ratio of the positive active material, the binder, and the conductive agent was 91: 5: 4 when the positive active material was LFP, and 92: 5: 3 when the positive active material was NCM in mass ratio. The coating solution was applied to both surfaces of the substrate, dried, and pressed to form a positive active material layer. The coating amount of the positive composite (obtained by evaporating the dispersion medium from the positive composite paste) per unit area of one surface after drying was set to 8.9 mg/cm$^2$ in both cases of LFP and NCM as the positive active material. As the substrate, there was used a substrate formed by an intermediate layer containing acetylene black (acetylene black: a mixture of a chitosan derivative in a mass ratio of 1: 2) on an aluminum foil having a thickness of 12 μm at a coating amount of 0.5 g/m$^2$.

(Production of energy storage device)

Next, the positive electrode and the negative electrode were laminated via a separator made of a polyethylene microporous film to produce an electrode assembly. The electrode assembly was housed into an aluminum prismatic container can, and a positive electrode terminal and a negative electrode terminal were attached. After the nonaqueous electrolyte was injected into the case (prismatic container can), the nonaqueous electrolyte was sealed to obtain the energy storage devices of Examples and Comparative Examples.

[Measurement of physical property value of negative active material]

(Median Diameter ($D_{50}$))

The median diameter ($D_{50}$) was measured by the following method. A laser diffraction type particle size distribution measuring apparatus ("SALD-2200" manufactured by Shimadzu Corporation) was used as a measuring apparatus, and Wing SALD-2200 is used as measurement control software. A scattering measurement mode was adopted, and a wet cell, in which a dispersion liquid with a measurement sample dispersed in a dispersion solvent circulates, was irradiated with a laser beam to obtain a scattered light distribution from the measurement sample. The scattered light distribution is approximated by a log-normal distribution, and a particle size corresponding to an accumulation degree of 50% was defined as a median diameter (D50).

(Calculation of area ratio R of negative active material particles excluding voids in particles)

(1) Preparation of samples for measurement

The powder of the negative active material particles to be measured was fixed with a thermosetting resin. A cross-section polisher was used to expose the cross section of the negative active material particles fixed with resin to produce a sample for measurement.

(2) Acquisition of SEM image

For acquiring the SEM image, JSM-7001F (manufactured by JEOL Ltd.) was used as a scanning electron microscope. The condition for acquiring the SEM image is to observe a secondary electron image. An acceleration voltage was set to 15 kV. An observation magnification was set so that the number of negative active material particles appearing in one field of view was 3 or more and 15 or less. The obtained SEM image was stored as an image file. In addition, various conditions such as spot diameter, working distance, irradiation current, luminance, and focus were appropriately set so as to make the contour of the negative active material particle clear.

(3) Cutting of contour of negative active material particle

The contour of the negative active material particle was cut out from the acquired SEM image by using an image cutting function of an image editing software Adobe Photoshop Elements 11. The contour was cut out by using a quick selection tool to select the outside of the contour of the active material particle and edit a portion except for the negative active material particle to a black background. Then, binarization processing was performed on the images of all the negative active material particles from which the contours had been able to be cut out. At this time, when the number of the negative active material particles from which the contours have been able to be cut out was less than three, the SEM image is acquired again, and the contour of the negative active material particles was cut out until the number of the negative active material particles from which the contours have been able to be cut out became three or more.

(4) Binarization processing

The image of the first negative active material particle among the cut-out negative active material particles was binarized by using image analysis software PopImaging 6.00 to set to a threshold value a concentration 20% lower than a concentration at which the intensity becomes maximum. By the binarization processing, an area on the low-concentration side was calculated to obtain "an area S1 excluding voids in the particles".

Next, the image of the first negative active material particle is binarized using a concentration 10 as a threshold value. The outer edge of the negative active material particle was determined by the binarization processing, and the area inside the outer edge was calculated to obtain an "area S0 of the whole particle".

By calculating S1 relative to S0 (S1/S0) by using S1 and S0 calculated above, "an area ratio R1 excluding voids in the particles relative to the area of the entire particle" in the first negative active material particle was calculated.

The images of the second and subsequent negative active material particles among the cut-out negative active material particles are also subjected to the binarization processing described above, and the areas S1 and S0 were calculated. Based on the calculated areas S1, S0, area ratios R2, R3,... of the respective negative active material particles are calculated.

(5) Determination of area ratio R

By calculating the average value of all the area ratios R1, R2, R3,... calculated by the binarization processing, "the area ratio R of the negative active material particles excluding voids in the particles relative to the total area of the particles" was determined.

(Determination of aspect ratio)

(1) Preparation of samples for measurement

A sample for measurement having an exposed cross section used for determining the area ratio R described above was used.

(2) Acquisition of SEM image

For acquiring the SEM image, JSM-7001F (manufactured by JEOL Ltd.) was used as a scanning electron microscope. The condition for acquiring the SEM image is to observe a secondary electron image. An acceleration voltage was set to 15 kV. An observation magnification was set so that the number of negative active material particles appearing in one field of view was 100 or more and 1000 or less. The obtained SEM image was stored as an image file. In addition,

various conditions such as spot diameter, working distance, irradiation current, luminance, and focus were appropriately set so as to make the contour of the negative active material particle clear.

(3) Determination of aspect ratio

From the acquired SEM image, 100 negative active material particles are randomly selected, and for each of the particles, the longest diameter A of the negative active material particle and the longest diameter B in the direction perpendicular to the diameter A were measured to calculate the A/B value. The average value of all the calculated A/B values was calculated to determine the aspect ratio of the negative active material particles.

The physical properties of the negative active material, the type of the positive active material, and the type and content of additives used in the nonaqueous electrolyte are shown in Tables 1 to 12. "-" in Tables 1 to 12 below indicates that no corresponding component was used. In Tables 1 to 12, the structure of the negative active material particle having an area ratio R of 95% or more is referred to as "solid", and the structure of the negative active material particles having an area ratio R of less than 95% is referred to as "hollow".

[Evaluation]

(Capacity Retention Rate after charge-discharge cycle)

(1) Measurement of discharge capacity during initial charge and discharge

Each of the obtained nonaqueous electrolyte energy storage devices was subjected to a confirmation test for the discharge capacity during initial charge and discharge under the following conditions. After constant current charge of 1 C to a predetermined voltage at 25°C, constant voltage charge was performed. The constant voltage charge was performed until the total charge time reached two hours. The predetermined voltage during constant voltage charge was 3.5 V when the positive active material was LFP and 3.75 V when the positive active material was NCM. Apause of ten minutes was taken after the charge, and then the battery was discharged at a constant current of 1 C to a predetermined voltage at 25°C. The predetermined voltage during the constant current discharge was 2.0 V for LFP and 2.5 V for NCM. The discharge capacity obtained during the initial charge and discharge was used as the initial discharge capacity.

(2) Measurement of discharge capacity after charge-discharge cycle such that integration time is 1000 hours

Each nonaqueous electrolyte energy storage device was adjusted to a state of charge (SOC) of 50% by charging 50% of the initial discharge capacity obtained in the above (1). The adjusted nonaqueous electrolyte energy storage device was stored in a thermostatic bath at 45°C for four hours, charged with a current value of 5 C for 45% of the initial discharge capacity obtained in (1), and a voltage Vc at the end of charge was read. Thereafter, 85% of the initial discharge capacity obtained in (1) was discharged without a pause, and the voltage Vd at the end of discharge was read. Thereafter, the upper limit voltage was set to Vc, the lower limit voltage was set to Vd, and a constant current charge-discharge cycle was performed at a current value of 5 C. The cycle time of 250 hours was defined as one period, charge and discharge were stopped after the end of one period, storage was performed at 25°C for four hours, and then the discharge capacity was confirmed in the same manner as in (1). The cycle operation for 250 hours was performed for four periods, and the discharge capacity confirmed at the end of four periods was defined as the discharge capacity after the end of the four periods (after the charge-discharge cycles was performed so that the integration time was 1000 hours). The discharge capacity after the end of the four periods relative to the initial discharge capacity was calculated to obtain the "cycle capacity retention rate after cycles [%]". The "capacity retention rate after cycles [%]" at this time is shown in Tables 1 to 12.

(Initial low-temperature Input performance)

For initial low-temperature input performance, the nonaqueous electrolyte energy storage device adjusted to SOC 50% in a thermostatic bath at 25°C was placed in a thermostatic bath at -10°C and left to stand for four hours. Thereafter, the battery was charged at a current value of 4 A for ten seconds, and after a pause of 300 seconds, the same amount of electricity as the charged amount of electricity was discharged at a current value of 0.5 A. After a pause of 600 seconds, under the same conditions except that the charge current value was changed to 6 A, 8 A, 10 A, and 12 A, charge tests were conducted at the respective current values.

Thereafter, each charge current value (4 A, 6 A, 8 A, 10 A, 12 A) was plotted on the horizontal axis, the voltage one second after the start of charge was plotted on the vertical axis, and linear approximation was performed using the least-squares method for these plots. The slope of the straight line is defined as a resistance R [Ω] of the nonaqueous electrolyte energy storage device. Based on the calculated R value, power P [W] that can be input to the nonaqueous electrolyte

energy storage device was calculated by (Equation 1) below and defined "initial low-temperature input performance [W]".

$$\text{(Equation 1)} \quad P = V_{max} \times (V_{max} - V_{50})/R$$

Here, $V_{max}$ means an upper limit value of a voltage to be used per one nonaqueous electrolyte energy storage device. In all Examples and Comparative Examples, 3.75 V was used for $V_{max}$. $V_{50}$ means the open-circuit voltage at SOC 50%. In Examples and Comparative Examples, for $V_{50}$, 3.32 V was used in the case of using $LiFePO_4$ for the positive active material (Tables 1 to 11), 3.60 V was used in the case of using $LiNi_{1/3}Co_{1/3}Mn_{1/3}O_2$ for the positive active material (Example 292, Example 295, and Comparative Examples 7 to 8 in Table 12), and 3.58 V was used in the case of using $LiNi_{0.5}Co_{0.2}Mn_{0.3}O_2$ or $LiNi_{0.6}Co_{0.2}Mn_{0.2}O_2$ as the positive active material (Examples 293 to 294 in Table 12.

Table 1 below shows evaluation results when the types of graphite as the negative active material and the imide salt containing phosphorus or sulfur contained in the nonaqueous electrolyte were changed in Examples and Comparative Examples.

[Table 1]

| | Negative active material (graphite) | | | | Positive active material | Additive for nonaqueous electrolyte | | | | | | Evaluation |
|---|---|---|---|---|---|---|---|---|---|---|---|---|
| | | | | | | Imide salt containing phosphorus or sulfur | | | Oxalate complex salt | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] |
| Example 1 | Solid | 3.0 | 3.0 | 99.1 | $LiFePO_4$ | 2.0 | - | - | - | - | - | 79 |
| Comparative Example 1 | Solid | 3.0 | 3.0 | 99.1 | $LiFePO_4$ | - | - | - | - | - | - | 66 |
| Comparative Example 2 | Hollow | 1.6 | 8.8 | 88.8 | $LiFePO_4$ | 2.0 | - | - | - | - | - | 63 |
| Comparative Example 3 | Solid | 10.0 | 10.3 | 98.9 | $LiFePO_4$ | 2.0 | - | - | - | - | - | 55 |
| Example 2 | Solid | 3.0 | 3.0 | 99.1 | $LiFePO_4$ | - | 2.0 | - | - | - | - | 79 |
| Example 3 | Solid | 3.0 | 3.0 | 99.1 | $LiFePO_4$ | - | - | 2.0 | - | - | - | 77 |
| Example 1 | Solid | 3.0 | 3.0 | 99.1 | $LiFePO_4$ | 2.0 | - | - | - | - | - | 79 |
| Example 4 | Solid | 1.2 | 10.0 | 98.7 | $LiFePO_4$ | 2.0 | - | - | - | - | - | 83 |
| Example 5 | Solid | 1.2 | 22.0 | 99.2 | $LiFePO_4$ | 2.0 | - | - | - | - | - | 87 |
| Comparative Example 4 | Hollow | 1.6 | 9.0 | 88.8 | $LiFePO_4$ | 2.0 | - | - | - | - | - | 63 |
| Comparative Example 5 | Hollow | 1.5 | 14.0 | 88.2 | $LiFePO_4$ | 2.0 | - | - | - | - | - | 64 |
| Comparative Example 6 | Hollow | 1.5 | 21.0 | 87.6 | $LiFePO_4$ | 2.0 | - | - | - | - | - | 65 |

As shown in Table 1, in Examples 1, 4, and 5 where the negative active material contained solid graphite particles having an aspect ratio of 1 to 5 as the main component and the nonaqueous electrolyte contained the imide salt containing phosphorus or sulfur, the capacity retention rate after the charge-discharge cycles was excellent. Moreover, in Examples, the capacity retention rate after the charge-discharge cycles was excellent regardless of the type of the imide salt. Furthermore, it is found from Examples 1, 4, and 5 that the capacity retention rate after the charge-discharge cycles is excellent, even when the median diameter of the solid graphite particles is different.

Next, Tables 2 to 11 below show the evaluation results when the content of imide salt containing phosphorus or sulfur was changed and when oxalate complex salt was further contained in Examples and Comparative Examples.

[Table 2]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Comparative Example 1 | Solid | 3.0 | 3.0 | 99.1 | $LiFePO_4$ | 0.0 | - | - | - | - | - | 66 | 83 |
| Example 6 | Solid | 3.0 | 3.0 | 99.1 | $LiFePO_4$ | 0.5 | - | - | - | - | - | 71 | 115 |
| Example 7 | Solid | 3.0 | 3.0 | 99.1 | $LiFePO_4$ | 1.0 | - | - | - | - | - | 75 | 120 |
| Example 1 | Solid | 3.0 | 3.0 | 99.1 | $LiFePO_4$ | 2.0 | - | - | - | - | - | 79 | 122 |
| Example 9 | Solid | 3.0 | 3.0 | 99.1 | $LiFePO_4$ | 3.0 | - | - | - | - | - | 79 | 123 |
| Example 10 | Solid | 3.0 | 3.0 | 99.1 | $LiFePO_4$ | 3.5 | - | - | - | - | - | 78 | 122 |
| Example 11 | Solid | 3.0 | 3.0 | 99.1 | $LiFePO_4$ | 4.0 | - | - | - | - | - | 74 | 120 |
| Example 102 | Solid | 3.0 | 3.0 | 99.1 | $LiFePO_4$ | - | 0.5 | - | - | - | - | 72 | 115 |
| Example 103 | Solid | 3.0 | 3.0 | 99.1 | $LiFePO_4$ | - | 1.0 | - | - | - | - | 76 | 119 |
| Example 2 | Solid | 3.0 | 3.0 | 99.1 | $LiFePO_4$ | - | 2.0 | - | - | - | - | 79 | 120 |
| Example 104 | Solid | 3.0 | 3.0 | 99.1 | $LiFePO_4$ | - | 3.0 | - | - | - | - | 79 | 120 |
| Example 105 | Solid | 3.0 | 3.0 | 99.1 | $LiFePO_4$ | - | 3.5 | - | - | - | - | 78 | 119 |
| Example 106 | Solid | 3.0 | 3.0 | 99.1 | $LiFePO_4$ | - | 4.0 | - | - | - | - | 75 | 117 |
| Example 197 | Solid | 3.0 | 3.0 | 99.1 | $LiFePO_4$ | - | - | 0.5 | - | - | - | 71 | 115 |
| Example 198 | Solid | 3.0 | 3.0 | 99.1 | $LiFePO_4$ | - | - | 1.0 | - | - | - | 75 | 119 |
| Example 3 | Solid | 3.0 | 3.0 | 99.1 | $LiFePO_1$ | - | - | 2.0 | - | - | - | 77 | 120 |
| Example 199 | Solid | 3.0 | 3.0 | 99.1 | $LiFePO_4$ | - | - | 3.0 | - | - | - | 77 | 120 |
| Example 200 | Solid | 3.0 | 3.0 | 99.1 | $LiFePO_4$ | - | - | 3.5 | - | - | - | 76 | 119 |
| Example 201 | Solid | 3.0 | 3.0 | 99.1 | $LiFePO_4$ | - | - | 4.0 | - | - | - | 74 | 117 |

[Table 3]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 6 | Solid | 3.0 | 3.0 | 99.1 | $LiFePO_4$ | 0.5 | - | - | - | - | - | 71 | 115 |
| Example 12 | Solid | 3.0 | 3.0 | 99.1 | $LiFePO_4$ | 0.5 | - | - | 0.1 | - | - | 72 | 115 |
| Example 13 | Solid | 3.0 | 3.0 | 99.1 | $LiFePO_4$ | 0.5 | - | - | 0.3 | - | - | 75 | 120 |
| Example 14 | Solid | 3.0 | 3.0 | 99.1 | $LiFePO_4$ | 0.5 | - | - | 0.5 | - | - | 76 | 121 |
| Example 15 | Solid | 3.0 | 3.0 | 99.1 | $LiFePO_4$ | 0.5 | - | - | 1.0 | - | - | 76 | 121 |
| Example 16 | Solid | 3.0 | 3.0 | 99.1 | $LiFePO_4$ | 0.5 | - | - | 1.2 | - | - | 73 | 118 |
| Example 7 | Solid | 3.0 | 3.0 | 99.1 | $LiFePO_4$ | 1.0 | - | - | - | - | - | 75 | 120 |
| Example 17 | Solid | 3.0 | 3.0 | 99.1 | $LiFePO_4$ | 1.0 | - | - | 0.1 | - | - | 76 | 125 |
| Example 18 | Solid | 3.0 | 3.0 | 99.1 | $LiFePO_4$ | 1.0 | - | - | 0.3 | - | - | 81 | 132 |
| Example 19 | Solid | 3.0 | 3.0 | 99.1 | $LiFePO_4$ | 1.0 | - | - | 0.5 | - | - | 81 | 135 |
| Example 20 | Solid | 3.0 | 3.0 | 99.1 | $LiFePO_4$ | 1.0 | - | - | 1.0 | - | - | 81 | 134 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 21 | Solid | 3.0 | 3.0 | 99.1 | $LiFePO_4$ | 1.0 | - | - | 1.2 | - | - | 77 | 130 |
| Example 1 | Solid | 3.0 | 3.0 | 99.1 | $LiFePO_4$ | 2.0 | - | - | - | - | - | 79 | 122 |
| Example 22 | Solid | 3.0 | 3.0 | 99.1 | $LiFePO_4$ | 2.0 | - | - | 0.1 | - | - | 79 | 1 2.5 |
| Example 23 | Solid | 3.0 | 3.0 | 99.1 | $LiFePO_4$ | 2.0 | - | - | 0.3 | - | - | 83 | 132 |
| Example 24 | Solid | 3.0 | 3.0 | 99.1 | $LiFePO_4$ | 2.0 | - | - | 0.5 | - | - | 84 | 135 |
| Example 25 | Solid | 3.0 | 3.0 | 99.1 | $LiFePO_4$ | 2.0 | - | - | 1.0 | - | - | 83 | 133 |
| Example 26 | Solid | 3.0 | 3.0 | 99.1 | $LiFePO_4$ | 2.0 | - | - | 1.2 | - | - | 79 | 130 |
| Example 9 | Solid | 3.0 | 3.0 | 99.1 | $LiFePO_4$ | 3.0 | - | - | - | - | - | 79 | 123 |
| Example 27 | Solid | 3.0 | 3.0 | 99.1 | $LiFePO_4$ | 3.0 | - | - | 0.1 | - | - | 79 | 125 |
| Example 28 | Solid | 3.0 | 3.0 | 99.1 | $LiFePO_4$ | 3.0 | - | - | 0.3 | - | - | 83 | 132 |
| Example 29 | Solid | 3.0 | 3.0 | 99.1 | $LiFePO_4$ | 3.0 | - | - | 0.5 | - | - | 84 | 134 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 30 | Solid | 3.0 | 3.0 | 99.1 | $LiFePO_4$ | 3.0 | - | - | 1.0 | - | - | 83 | 133 |
| Example 31 | Solid | 3.0 | 3.0 | 99.1 | $LiFePO_4$ | 3.0 | - | - | 1.2 | - | - | 79 | 129 |
| Example 10 | Solid | 3.0 | 3.0 | 99.1 | $LiFePO_4$ | 3.5 | - | - | - | - | - | 78 | 122 |
| Example 32 | Solid | 3.0 | 3.0 | 99.1 | $LiFePO_4$ | 3.5 | - | - | 0.1 | - | - | 78 | 124 |
| Example 33 | Solid | 3.0 | 3.0 | 99.1 | $LiFePO_4$ | 3.5 | - | - | 0.3 | - | - | 82 | 131 |
| Example 34 | Solid | 3.0 | 3.0 | 99.1 | $LiFePO_4$ | 3.5 | - | - | 0.5 | - | - | 83 | 133 |
| Example 35 | Solid | 3.0 | 3.0 | 99.1 | $LiFePO_4$ | 3.5 | - | - | 1.0 | - | - | 82 | 132 |
| Example 36 | Solid | 3.0 | 3.0 | 99.1 | $LiFePO_4$ | 3.5 | - | - | 1.2 | - | - | 78 | 129 |
| Example 11 | Solid | 3.0 | 3.0 | 99.1 | $LiFePO_4$ | 4.0 | - | - | - | - | - | 74 | 120 |
| Example 37 | Solid | 3.0 | 3.0 | 99.1 | $LiFePO_4$ | 4.0 | - | - | 0.1 | - | - | 77 | 120 |
| Example 38 | Solid | 3.0 | 3.0 | 99.1 | $LiFePO_4$ | 4.0 | - | - | 0.3 | - | - | 78 | 125 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 39 | Solid | 3.0 | 3.0 | 99.1 | $LiFePO_4$ | 4.0 | - | - | 0.5 | - | - | 79 | 128 |
| Example 40 | Solid | 3.0 | 3.0 | 99.1 | $LiFePO_4$ | 4.0 | - | - | 1.0 | - | - | 79 | 125 |
| Example 41 | Solid | 3.0 | 3.0 | 99.1 | $LiFePO_4$ | 4.0 | - | - | 1.2 | - | - | 77 | 123 |

[Table 4]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 6 | Solid | 3.0 | 3.0 | 99.1 | $LiFePO_4$ | 0.5 | - | - | - | - | - | 71 | 115 |
| Example 42 | Solid | 3.0 | 3.0 | 99.1 | $LiFePO_4$ | 0.5 | - | - | - | 0.1 | - | **74** | 105 |
| Example 43 | Solid | 3.0 | 3.0 | 99.1 | $LiFePO_4$ | 0.5 | - | - | - | 0.3 | - | **77** | 110 |
| Example 44 | Solid | 3.0 | 3.0 | 99.1 | $LiFePO_4$ | 0.5 | - | - | - | 0.5 | - | 78 | 111 |
| Example 45 | Solid | 3.0 | 3.0 | 99.1 | $LiFePO_4$ | 0.5 | - | - | - | 1.0 | - | 78 | 111 |
| Example 46 | Solid | 3.0 | 3.0 | 99.1 | $LiFePO_4$ | 0.5 | - | - | - | 1.2 | - | 75 | 105 |
| Example 7 | Solid | 3.0 | 3.0 | 99.1 | $LiFePO_4$ | 1.0 | - | - | - | - | - | 75 | 120 |
| Example 47 | Solid | 3.0 | 3.0 | 99.1 | $LiFePO_4$ | 1.0 | - | - | - | 0.1 | - | 77 | 115 |
| Example 48 | Solid | 3.0 | 3.0 | 99.1 | $LiFePO_4$ | 1.0 | - | - | - | 0.3 | - | 82 | 122 |
| Example 49 | Solid | 3.0 | 3.0 | 99.1 | $LiFePO_4$ | 1.0 | - | - | - | 0.5 | - | 83 | 125 |
| Example 50 | Solid | 3.0 | 3.0 | 99.1 | $LiFePO_4$ | 1.0 | - | - | - | 1.0 | - | 82 | 124 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 51 | Solid | 3.0 | 3.0 | 99.1 | $LiFePO_4$ | 1.0 | - | - | - | 1.2 | - | 78 | 117 |
| Example 1 | Solid | 3.0 | 3.0 | 99.1 | $LiFePO_4$ | 2.0 | - | - | - | - | - | 79 | 122 |
| Example 52 | Solid | 3.0 | 3.0 | 99.1 | $LiFePO_4$ | 2.0 | - | - | - | 0.1 | - | 81 | 1 1.5 |
| Example 53 | Solid | 3.0 | 3.0 | 99.1 | $LiFePO_4$ | 2.0 | - | - | - | 0.3 | - | 85 | 122 |
| Example 54 | Solid | 3.0 | 3.0 | 99.1 | $LiFePO_4$ | 2.0 | - | - | - | 0.5 | - | 86 | 125 |
| Example 55 | Solid | 3.0 | 3.0 | 99.1 | $LiFePO_4$ | 2.0 | - | - | - | 1.0 | - | 85 | 123 |
| Example 56 | Solid | 3.0 | 3.0 | 99.1 | $LiFePO_4$ | 2.0 | - | - | - | 1.2 | - | 81 | 117 |
| Example 9 | Solid | 3.0 | 3.0 | 99.1 | $LiFePO_4$ | 3.0 | - | - | - | - | - | 79 | 123 |
| Example 57 | Solid | 3.0 | 3.0 | 99.1 | $LiFePO_4$ | 3.0 | - | - | - | 0.1 | - | 81 | 115 |
| Example 58 | Solid | 3.0 | 3.0 | 99.1 | $LiFePO_4$ | 3.0 | - | - | - | 0.3 | - | 85 | 122 |
| Example 59 | Solid | 3.0 | 3.0 | 99.1 | $LiFePO_4$ | 3.0 | - | - | - | 0.5 | - | 86 | 124 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 60 | Solid | 3.0 | 3.0 | 99.1 | $LiFePO_4$ | 3.0 | - | - | - | 1.0 | - | 85 | 123 |
| Example 61 | Solid | 3.0 | 3.0 | 99.1 | $LiFePO_4$ | 3.0 | - | - | - | 1.2 | - | 81 | 117 |
| Example 10 | Solid | 3.0 | 3.0 | 99.1 | $LiFePO_4$ | 3.5 | - | - | - | - | - | 78 | 122 |
| Example 62 | Solid | 3.0 | 3.0 | 99.1 | $LiFePO_4$ | 3.5 | - | - | - | 0.1 | - | 80 | 114 |
| Example 63 | Solid | 3.0 | 3.0 | 99.1 | $LiFePO_4$ | 3.5 | - | - | - | 0.3 | - | 84 | 121 |
| Example 64 | Solid | 3.0 | 3.0 | 99.1 | $LiFePO_4$ | 3.5 | - | - | - | 0.5 | - | 85 | 123 |
| Example 65 | Solid | 3.0 | 3.0 | 99.1 | $LiFePO_4$ | 3.5 | - | - | - | 1.0 | - | 84 | 122 |
| Example 66 | Solid | 3.0 | 3.0 | 99.1 | $LiFePO_4$ | 3.5 | - | - | - | 1.2 | - | 80 | 117 |
| Example 11 | Solid | 3.0 | 3.0 | 99.1 | $LiFePO_4$ | 4.0 | - | - | - | - | - | 74 | 120 |
| Example 67 | Solid | 3.0 | 3.0 | 99.1 | $LiFePO_4$ | 4.0 | - | - | - | 0.1 | - | 78 | 110 |
| Example 68 | Solid | 3.0 | 3.0 | 99.1 | $LiFePO_4$ | 4.0 | - | - | - | 0.3 | - | 80 | 115 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 69 | Solid | 3.0 | 3.0 | 99.1 | $LiFePO_4$ | 4.0 | - | - | - | 0.5 | - | 81 | 118 |
| Example 70 | Solid | 3.0 | 3.0 | 99.1 | $LiFePO_4$ | 4.0 | - | - | - | 1.0 | - | 81 | 115 |
| Example 71 | Solid | 3.0 | 3.0 | 99.1 | $LiFePO_4$ | 4.0 | - | - | - | 1.2 | - | 79 | 110 |

[Table 5]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 6 | Solid | 3.0 | 3.0 | 99.1 | $LiFePO_4$ | 0.5 | - | - | - | - | - | 71 | 115 |
| Example 72 | Solid | 3.0 | 3.0 | 99.1 | $LiFePO_4$ | 0.5 | - | - | - | - | 0.1 | **74** | 103 |
| Example 73 | Solid | 3.0 | 3.0 | 99.1 | $LiFePO_4$ | 0.5 | - | - | - | - | 0.3 | **77** | 108 |
| Example 74 | Solid | 3.0 | 3.0 | 99.1 | $LiFePO_4$ | 0.5 | - | - | - | - | 0.5 | 78 | 109 |
| Example 75 | Solid | 3.0 | 3.0 | 99.1 | $LiFePO_4$ | 0.5 | - | - | - | - | 1.0 | 78 | 109 |
| Example 76 | Solid | 3.0 | 3.0 | 99.1 | $LiFePO_4$ | 0.5 | - | - | - | - | 1.2 | 75 | 103 |
| Example 7 | Solid | 3.0 | 3.0 | 99.1 | $LiFePO_4$ | 1.0 | - | - | - | - | - | 75 | 120 |
| Example 77 | Solid | 3.0 | 3.0 | 99.1 | $LiFePO_4$ | 1.0 | - | - | - | - | 0.1 | 77 | 112 |
| Example 78 | Solid | 3.0 | 3.0 | 99.1 | $LiFePO_4$ | 1.0 | - | - | - | - | 0.3 | 82 | 121 |
| Example 79 | Solid | 3.0 | 3.0 | 99.1 | $LiFePO_4$ | 1.0 | - | - | - | - | 0.5 | 84 | 123 |
| Example 80 | Solid | 3.0 | 3.0 | 99.1 | $LiFePO_4$ | 1.0 | - | - | - | - | 1.0 | 83 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 81 | Solid | 3.0 | 3.0 | 99.1 | $LiFePO_4$ | 1.0 | - | - | - | - | 1.2 | 78 | 115 |
| Example 1 | Solid | 3.0 | 3.0 | 99.1 | $LiFePO_4$ | 2.0 | - | - | - | - | - | 79 | 122 |
| Example 82 | Solid | 3.0 | 3.0 | 99.1 | $LiFePO_4$ | 2.0 | - | - | - | - | 0.1 | 81 | 112 |
| Example 83 | Solid | 3.0 | 3.0 | 99.1 | $LiFePO_4$ | 2.0 | - | - | - | - | 0.3 | 86 | 121 |
| Example 84 | Solid | 3.0 | 3.0 | 99.1 | $LiFePO_4$ | 2.0 | - | - | - | - | 0.5 | 87 | 123 |
| Example 85 | Solid | 3.0 | 3.0 | 99.1 | $LiFePO_4$ | 2.0 | - | - | - | - | 1.0 | 86 | 122 |
| Example 86 | Solid | 3.0 | 3.0 | 99.1 | $LiFePO_4$ | 2.0 | - | - | - | - | 1.2 | 81 | 115 |
| Example 9 | Solid | 3.0 | 3.0 | 99.1 | $LiFePO_4$ | 3.0 | - | - | - | - | - | 79 | 123 |
| Example 87 | Solid | 3.0 | 3.0 | 99.1 | $LiFePO_4$ | 3.0 | - | - | - | - | 0.1 | 81 | 114 |
| Example 88 | Solid | 3.0 | 3.0 | 99.1 | $LiFePO_4$ | 3.0 | - | - | - | - | 0.3 | 86 | 121 |
| Example 89 | Solid | 3.0 | 3.0 | 99.1 | $LiFePO_4$ | 3.0 | - | - | - | - | 0.5 | 87 | 123 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 90 | Solid | 3.0 | 3.0 | 99.1 | $LiFePO_4$ | 3.0 | - | - | - | - | 1.0 | 86 | 122 |
| Example 91 | Solid | 3.0 | 3.0 | 99.1 | $LiFePO_4$ | 3.0 | - | - | - | - | 1.2 | 81 | 116 |
| Example 10 | Solid | 3.0 | 3.0 | 99.1 | $LiFePO_4$ | 3.5 | - | - | - | - | - | 78 | 122 |
| Example 92 | Solid | 3.0 | 3.0 | 99.1 | $LiFePO_4$ | 3.5 | - | - | - | - | 0.1 | 80 | 113 |
| Example 93 | Solid | 3.0 | 3.0 | 99.1 | $LiFePO_4$ | 3.5 | - | - | - | - | 0.3 | 85 | 121 |
| Example 94 | Solid | 3.0 | 3.0 | 99.1 | $LiFePO_4$ | 3.5 | - | - | - | - | 0.5 | 86 | 123 |
| Example 95 | Solid | 3.0 | 3.0 | 99.1 | $LiFePO_4$ | 3.5 | - | - | - | - | 1.0 | 86 | 122 |
| Example 96 | Solid | 3.0 | 3.0 | 99.1 | $LiFePO_4$ | 3.5 | - | - | - | - | 1.2 | 80 | 115 |
| Example 11 | Solid | 3.0 | 3.0 | 99.1 | $LiFePO_4$ | 4.0 | - | - | - | - | - | 74 | 120 |
| Example 97 | Solid | 3.0 | 3.0 | 99.1 | $LiFePO_4$ | 4.0 | - | - | - | - | 0.1 | 78 | 109 |
| Example 98 | Solid | 3.0 | 3.0 | 99.1 | $LiFePO_4$ | 4.0 | - | - | - | - | 0.3 | 81 | 112 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 99 | Solid | 3.0 | 3.0 | 99.1 | $LiFePO_4$ | 4.0 | - | - | - | - | 0.5 | 82 | 115 |
| Example 100 | Solid | 3.0 | 3.0 | 99.1 | $LiFePO_4$ | 4.0 | - | - | - | - | 1.0 | 82 | 112 |
| Example 101 | Solid | 3.0 | 3.0 | 99.1 | $LiFePO_4$ | 4.0 | - | - | - | - | 1.2 | 79 | 107 |

[Table 6]

| | Negative active material (graphite) | | | | Positive active material | Additive for nonaqueous electrolyte | | | | | | Evaluation | |
|---|---|---|---|---|---|---|---|---|---|---|---|---|---|
| | Structure | Aspect ratio | Median diameter ($D_{50}$) [μm] | Area ratio [%] | Type | Imide salt containing phosphorus or sulfur | | | Oxalate complex salt | | | Capacity retention rate after cycles [%] | Initial low-temperature input performance [W] |
| | | | | | | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | | |
| Example 102 | Solid | 3.0 | 3.0 | 99.1 | $LiFePO_4$ | - | 0.5 | - | - | - | - | 72 | 115 |
| Example 107 | Solid | 3.0 | 3.0 | 99.1 | $LiFePO_4$ | - | 0.5 | - | 0.1 | - | - | 72 | 113 |
| Example 108 | Solid | 3.0 | 3.0 | 99.1 | $LiFePO_4$ | - | 0.5 | - | 0.3 | - | - | 75 | 118 |
| Example 109 | Solid | 3.0 | 3.0 | 99.1 | $LiFePO_4$ | - | 0.5 | - | 0.5 | - | - | 76 | 119 |
| Example 110 | Solid | 3.0 | 3.0 | 99.1 | $LiFePO_4$ | - | 0.5 | - | 1.0 | - | - | 76 | 119 |
| Example 111 | Solid | 3.0 | 3.0 | 99.1 | $LiFePO_4$ | - | 0.5 | - | 1.2 | - | - | 73 | 116 |
| Example 103 | Solid | 3.0 | 3.0 | 99.1 | $LiFePO_4$ | - | 1.0 | - | - | - | - | 76 | 119 |
| Example 112 | Solid | 3.0 | 3.0 | 99.1 | $LiFePO_4$ | - | 1.0 | - | 0.1 | - | - | 76 | 123 |
| Example 113 | Solid | 3.0 | 3.0 | 99.1 | $LiFePO_4$ | - | 1.0 | - | 0.3 | - | - | 81 | 130 |
| Example 114 | Solid | 3.0 | 3.0 | 99.1 | $LiFePO_4$ | - | 1.0 | - | 0.5 | - | - | 82 | 133 |
| Example 115 | Solid | 3.0 | 3.0 | 99.1 | $LiFePO_4$ | - | 1.0 | - | 1.0 | - | - | 81 | 132 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 116 | Solid | 3.0 | 3.0 | 99.1 | $LiFePO_4$ | - | 1.0 | - | 1.2 | - | - | 77 | 128 |
| Example 2 | Solid | 3.0 | 3.0 | 99.1 | $LiFePO_4$ | - | 2.0 | - | - | - | - | 79 | 120 |
| Example 117 | Solid | 3.0 | 3.0 | 99.1 | $LiFePO_4$ | - | 2.0 | - | 0.1 | - | - | 79 | 123 |
| Example 118 | Solid | 3.0 | 3.0 | 99.1 | $LiFePO_4$ | - | 2.0 | - | 0.3 | - | - | 83 | 130 |
| Example 119 | Solid | 3.0 | 3.0 | 99.1 | $LiFePO_4$ | - | 2.0 | - | 0.5 | - | - | 84 | 133 |
| Example 120 | Solid | 3.0 | 3.0 | 99.1 | $LiFePO_4$ | - | 2.0 | - | 1.0 | - | - | 83 | 131 |
| Example 121 | Solid | 3.0 | 3.0 | 99.1 | $LiFePO_4$ | - | 2.0 | - | 1.2 | - | - | 79 | 128 |
| Example 104 | Solid | 3.0 | 3.0 | 99.1 | $LiFePO_4$ | - | 3.0 | - | - | - | - | 79 | 120 |
| Example 122 | Solid | 3.0 | 3.0 | 99.1 | $LiFePO_4$ | - | 3.0 | - | 0.1 | - | - | 79 | 123 |
| Example 123 | Solid | 3.0 | 3.0 | 99.1 | $LiFePO_4$ | - | 3.0 | - | 0.3 | - | - | 83 | 130 |
| Example 124 | Solid | 3.0 | 3.0 | 99.1 | $LiFePO_4$ | - | 3.0 | - | 0.5 | - | - | 84 | 132 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 125 | Solid | 3.0 | 3.0 | 99.1 | $LiFePO_4$ | - | 3.0 | - | 1.0 | - | - | 83 | 131 |
| Example 126 | Solid | 3.0 | 3.0 | 99.1 | $LiFePO_4$ | - | 3.0 | - | 1.2 | - | - | 79 | 127 |
| Example 105 | Solid | 3.0 | 3.0 | 99.1 | $LiFePO_4$ | - | 3.5 | - | - | - | - | 78 | 119 |
| Example 127 | Solid | 3.0 | 3.0 | 99.1 | $LiFePO_4$ | - | 3.5 | - | 0.1 | - | - | 78 | 122 |
| Example 128 | Solid | 3.0 | 3.0 | 99.1 | $LiFePO_4$ | - | 3.5 | - | 0.3 | - | - | 82 | 129 |
| Example 129 | Solid | 3.0 | 3.0 | 99.1 | $LiFePO_4$ | - | 3.5 | - | 0.5 | - | - | 83 | 131 |
| Example 130 | Solid | 3.0 | 3.0 | 99.1 | $LiFePO_4$ | - | 3.5 | - | 1.0 | - | - | 82 | 130 |
| Example 131 | Solid | 3.0 | 3.0 | 99.1 | $LiFePO_4$ | - | 3.5 | - | 1.2 | - | - | 78 | 127 |
| Example 106 | Solid | 3.0 | 3.0 | 99.1 | $LiFePO_4$ | - | 4.0 | - | - | - | - | 75 | 117 |
| Example 132 | Solid | 3.0 | 3.0 | 99.1 | $LiFePO_4$ | - | 4.0 | - | 0.1 | - | - | 77 | 118 |
| Example 133 | Solid | 3.0 | 3.0 | 99.1 | $LiFePO_4$ | - | 4.0 | - | 0.3 | - | - | 78 | 123 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 134 | Solid | 3.0 | 3.0 | 99.1 | $LiFePO_4$ | - | 4.0 | - | 0.5 | - | - | 79 | 126 |
| Example 135 | Solid | 3.0 | 3.0 | 99.1 | $LiFePO_4$ | - | 4.0 | - | 1.0 | - | - | 79 | 123 |
| Example 136 | Solid | 3.0 | 3.0 | 99.1 | $LiFePO_4$ | - | 4.0 | - | 1.2 | - | - | 77 | 121 |

[Table 7]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 102 | Solid | 3.0 | 3.0 | 99.1 | $LiFePO_4$ | - | 0.5 | - | - | - | - | 72 | 115 |
| Example 137 | Solid | 3.0 | 3.0 | 99.1 | $LiFePO_4$ | - | 0.5 | - | - | 0.1 | - | 74 | 103 |
| Example 138 | Solid | 3.0 | 3.0 | 99.1 | $LiFePO_4$ | - | 0.5 | - | - | 0.3 | - | 77 | 108 |
| Example 139 | Solid | 3.0 | 3.0 | 99.1 | $LiFePO_4$ | - | 0.5 | - | - | 0.5 | - | 78 | 109 |
| Example 140 | Solid | 3.0 | 3.0 | 99.1 | $LiFePO_4$ | - | 0.5 | - | - | 1.0 | - | 78 | 109 |
| Example 141 | Solid | 3.0 | 3.0 | 99.1 | $LiFePO_4$ | - | 0.5 | - | - | 1.2 | - | 75 | 103 |
| Example 103 | Solid | 3.0 | 3.0 | 99.1 | $LiFePO_4$ | - | 1.0 | - | - | - | - | 76 | 119 |
| Example 142 | Solid | 3.0 | 3.0 | 99.1 | $LiFePO_4$ | - | 1.0 | - | - | 0.1 | - | 77 | 113 |
| Example 143 | Solid | 3.0 | 3.0 | 99.1 | $LiFePO_4$ | - | 1.0 | - | - | 0.3 | - | 82 | 120 |
| Example 144 | Solid | 3.0 | 3.0 | 99.1 | $LiFePO_4$ | - | 1.0 | - | - | 0.5 | - | 83 | 123 |
| Example 145 | Solid | 3.0 | 3.0 | 99.1 | $LiFePO_4$ | - | 1.0 | - | - | 1.0 | - | 82 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 146 | Solid | 3.0 | 3.0 | 99.1 | $LiFePO_4$ | - | 1.0 | - | - | 1.2 | - | 78 | 115 |
| Example 2 | Solid | 3.0 | 3.0 | 99.1 | $LiFePO_4$ | - | 2.0 | - | - | - | - | 79 | 120 |
| Example 147 | Solid | 3.0 | 3.0 | 99.1 | $LiFePO_4$ | - | 2.0 | - | - | 0.1 | - | 81 | 113 |
| Example 148 | Solid | 3.0 | 3.0 | 99.1 | $LiFePO_4$ | - | 2.0 | - | - | 0.3 | - | 85 | 120 |
| Example 149 | Solid | 3.0 | 3.0 | 99.1 | $LiFePO_4$ | - | 2.0 | - | - | 0.5 | - | 86 | 123 |
| Example 150 | Solid | 3.0 | 3.0 | 99.1 | $LiFePO_4$ | - | 2.0 | - | - | 1.0 | - | 85 | 121 |
| Example 151 | Solid | 3.0 | 3.0 | 99.1 | $LiFePO_4$ | - | 2.0 | - | - | 1.2 | - | 81 | 115 |
| Example 104 | Solid | 3.0 | 3.0 | 99.1 | $LiFePO_4$ | - | 3.0 | - | - | - | - | 79 | 120 |
| Example 152 | Solid | 3.0 | 3.0 | 99.1 | $LiFePO_4$ | - | 3.0 | - | - | 0.1 | - | 85 | 113 |
| Example 153 | Solid | 3.0 | 3.0 | 99.1 | $LiFePO_4$ | - | 3.0 | - | - | 0.3 | - | 86 | 120 |
| Example 154 | Solid | 3.0 | 3.0 | 99.1 | $LiFePO_4$ | - | 3.0 | - | - | 0.5 | - | 85 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 155 | Solid | 3.0 | 3.0 | 99.1 | $LiFePO_4$ | - | 3.0 | - | - | 1.0 | - | 81 | 121 |
| Example 156 | Solid | 3.0 | 3.0 | 99.1 | $LiFePO_4$ | - | 3.0 | - | - | 1.2 | - | 81 | 115 |
| Example 105 | Solid | 3.0 | 3.0 | 99.1 | $LiFePO_4$ | - | 3.5 | - | - | - | - | 78 | 119 |
| Example 157 | Solid | 3.0 | 3.0 | 99.1 | $LiFePO_4$ | - | 3.5 | - | - | 0.1 | - | 80 | 112 |
| Example 158 | Solid | 3.0 | 3.0 | 99.1 | $LiFePO_4$ | - | 3.5 | - | - | 0.3 | - | 84 | 120 |
| Example 159 | Solid | 3.0 | 3.0 | 99.1 | $LiFePO_4$ | - | 3.5 | - | - | 0.5 | - | 85 | 121 |
| Example 160 | Solid | 3.0 | 3.0 | 99.1 | $LiFePO_4$ | - | 3.5 | - | - | 1.0 | - | 84 | 120 |
| Example 161 | Solid | 3.0 | 3.0 | 99.1 | $LiFePO_4$ | - | 3.5 | - | - | 1.2 | - | 80 | 115 |
| Example 106 | Solid | 3.0 | 3.0 | 99.1 | $LiFePO_4$ | - | 4.0 | - | - | - | - | 75 | 117 |
| Example 162 | Solid | 3.0 | 3.0 | 99.1 | $LiFePO_4$ | - | 4.0 | - | - | 0.1 | - | 78 | 108 |
| Example 163 | Solid | 3.0 | 3.0 | 99.1 | $LiFePO_4$ | - | 4.0 | - | - | 0.3 | - | 80 | 113 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 164 | Solid | 3.0 | 3.0 | 99.1 | $LiFePO_4$ | - | 4.0 | - | - | 0.5 | - | 81 | 116 |
| Example 165 | Solid | 3.0 | 3.0 | 99.1 | $LiFePO_4$ | - | 4.0 | - | - | 1.0 | - | 81 | 113 |
| Example 166 | Solid | 3.0 | 3.0 | 99.1 | $LiFePO_4$ | - | 4.0 | - | - | 1.2 | - | 79 | 108 |

[Table 8]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 102 | Solid | 3.0 | 3.0 | 99.1 | $LiFePO_4$ | - | 0.5 | - | - | - | - | 72 | 115 |
| Example 167 | Solid | 3.0 | 3.0 | 99.1 | $LiFePO_4$ | - | 0.5 | - | - | - | 0.1 | 74 | 101 |
| Example 168 | Solid | 3.0 | 3.0 | 99.1 | $LiFePO_4$ | - | 0.5 | - | - | - | 0.3 | 77 | 106 |
| Example 169 | Solid | 3.0 | 3.0 | 99.1 | $LiFePO_4$ | - | 0.5 | - | - | - | 0.5 | 78 | 107 |
| Example 170 | Solid | 3.0 | 3.0 | 99.1 | $LiFePO_4$ | - | 0.5 | - | - | - | 1.0 | 78 | 107 |
| Example 171 | Solid | 3.0 | 3.0 | 99.1 | $LiFePO_4$ | - | 0.5 | - | - | - | 1.2 | 75 | 101 |
| Example 103 | Solid | 3.0 | 3.0 | 99.1 | $LiFePO_4$ | - | 1.0 | - | - | - | - | 76 | 119 |
| Example 172 | Solid | 3.0 | 3.0 | 99.1 | $LiFePO_4$ | - | 1.0 | - | - | - | 0.1 | 77 | 110 |
| Example 173 | Solid | 3.0 | 3.0 | 99.1 | $LiFePO_4$ | - | 1.0 | - | - | - | 0.3 | 82 | 121 |
| Example 174 | Solid | 3.0 | 3.0 | 99.1 | $LiFePO_4$ | - | 1.0 | - | - | - | 0.5 | 84 | 122 |
| Example 175 | Solid | 3.0 | 3.0 | 99.1 | $LiFePO_4$ | - | 1.0 | - | - | - | 1.0 | 83 | 121 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 176 | Solid | 3.0 | 3.0 | 99.1 | $LiFePO_4$ | - | 1.0 | - | - | - | 1.2 | 78 | 113 |
| Example 2 | Solid | 3.0 | 3.0 | 99.1 | $LiFePO_4$ | - | 2.0 | - | - | - | - | 79 | 120 |
| Example 177 | Solid | 3.0 | 3.0 | 99.1 | $LiFePO_4$ | - | 2.0 | - | - | - | 0.1 | 81 | 110 |
| Example 178 | Solid | 3.0 | 3.0 | 99.1 | $LiFePO_4$ | - | 2.0 | - | - | - | 0.3 | 86 | 121 |
| Example 179 | Solid | 3.0 | 3.0 | 99.1 | $LiFePO_4$ | - | 2.0 | - | - | - | 0.5 | 87 | 122 |
| Example 180 | Solid | 3.0 | 3.0 | 99.1 | $LiFePO_4$ | - | 2.0 | - | - | - | 1.0 | 86 | 121 |
| Example 181 | Solid | 3.0 | 3.0 | 99.1 | $LiFePO_4$ | - | 2.0 | - | - | - | 1.2 | 81 | 113 |
| Example 104 | Solid | 3.0 | 3.0 | 99.1 | $LiFePO_4$ | - | 3.0 | - | - | - | - | 79 | 120 |
| Example 182 | Solid | 3.0 | 3.0 | 99.1 | $LiFePO_4$ | - | 3.0 | - | - | - | 0.1 | 81 | 112 |
| Example 183 | Solid | 3.0 | 3.0 | 99.1 | $LiFePO_4$ | - | 3.0 | - | - | - | 0.3 | 86 | 121 |
| Example 184 | Solid | 3.0 | 3.0 | 99.1 | $LiFePO_4$ | - | 3.0 | - | - | - | 0.5 | 87 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 185 | Solid | 3.0 | 3.0 | 99.1 | $LiFePO_4$ | - | 3.0 | - | - | - | 1.0 | 86 | 121 |
| Example 186 | Solid | 3.0 | 3.0 | 99.1 | $LiFePO_4$ | - | 3.0 | - | - | - | 1.2 | 81 | 114 |
| Example 105 | Solid | 3.0 | 3.0 | 99.1 | $LiFePO_4$ | - | 3.5 | - | - | - | - | 78 | 119 |
| Example 187 | Solid | 3.0 | 3.0 | 99.1 | $LiFePO_4$ | - | 3.5 | - | - | - | 0.1 | 80 | 111 |
| Example 188 | Solid | 3.0 | 3.0 | 99.1 | $LiFePO_4$ | - | 3.5 | - | - | - | 0.3 | 85 | 120 |
| Example 189 | Solid | 3.0 | 3.0 | 99.1 | $LiFePO_4$ | - | 3.5 | - | - | - | 0.5 | 86 | 122 |
| Example 190 | Solid | 3.0 | 3.0 | 99.1 | $LiFePO_4$ | - | 3.5 | - | - | - | 1.0 | 86 | 121 |
| Example 191 | Solid | 3.0 | 3.0 | 99.1 | $LiFePO_4$ | - | 3.5 | - | - | - | 1.2 | 80 | 113 |
| Example 106 | Solid | 3.0 | 3.0 | 99.1 | $LiFePO_4$ | - | 4.0 | - | - | - | - | 75 | 117 |
| Example 192 | Solid | 3.0 | 3.0 | 99.1 | $LiFePO_4$ | - | 4.0 | - | - | - | 0.1 | 78 | 107 |
| Example 193 | Solid | 3.0 | 3.0 | 99.1 | $LiFePO_4$ | - | 4.0 | - | - | - | 0.3 | 81 | 110 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 194 | Solid | 3.0 | 3.0 | 99.1 | $LiFePO_4$ | - | 4.0 | - | - | - | 0.5 | 82 | 113 |
| Example 195 | Solid | 3.0 | 3.0 | 99.1 | $LiFePO_4$ | - | 4.0 | - | - | - | 1.0 | 82 | 110 |
| Example 196 | Solid | 3.0 | 3.0 | 99.1 | $LiFePO_4$ | - | 4.0 | - | - | - | 1.2 | 79 | 105 |

[Table 9]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 197 | Solid | 3.0 | 3.0 | 99.1 | $LiFePO_4$ | - | - | 0.5 | - | - | - | 71 | 115 |
| Example 202 | Solid | 3.0 | 3.0 | 99.1 | $LiFePO_4$ | - | - | 0.5 | 0.1 | - | - | 71 | 113 |
| Example 203 | Solid | 3.0 | 3.0 | 99.1 | $LiFePO_4$ | - | - | 0.5 | 0.3 | - | - | **74** | 118 |
| Example 204 | Solid | 3.0 | 3.0 | 99.1 | $LiFePO_4$ | - | - | 0.5 | 0.5 | - | - | 75 | 119 |
| Example 205 | Solid | 3.0 | 3.0 | 99.1 | $LiFePO_4$ | - | - | 0.5 | 1.0 | - | - | 75 | 119 |
| Example 206 | Solid | 3.0 | 3.0 | 99.1 | $LiFePO_4$ | - | - | 0.5 | 1.2 | - | - | 72 | 116 |
| Example 198 | Solid | 3.0 | 3.0 | 99.1 | $LiFePO_4$ | - | - | 1.0 | - | - | - | 75 | 119 |
| Example 207 | Solid | 3.0 | 3.0 | 99.1 | $LiFePO_4$ | - | - | 1.0 | 0.1 | - | - | 75 | 123 |
| Example 208 | Solid | 3.0 | 3.0 | 99.1 | $LiFePO_4$ | - | - | 1.0 | 0.3 | - | - | 80 | 130 |
| Example 209 | Solid | 3.0 | 3.0 | 99.1 | $LiFePO_4$ | - | - | 1.0 | 0.5 | - | - | 81 | 133 |
| Example 210 | Solid | 3.0 | 3.0 | 99.1 | $LiFePO_4$ | - | - | 1.0 | 1.0 | - | - | 80 | 132 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 211 | Solid | 3.0 | 3.0 | 99.1 | $LiFePO_4$ | - | - | 1.0 | 1.2 | - | - | 76 | 128 |
| Example 3 | Solid | 3.0 | 3.0 | 99.1 | $LiFePO_4$ | - | - | 2.0 | - | - | - | 77 | 120 |
| Example 212 | Solid | 3.0 | 3.0 | 99.1 | $LiFePO_4$ | - | - | 2.0 | 0.1 | - | - | 78 | 123 |
| Example 213 | Solid | 3.0 | 3.0 | 99.1 | $LiFePO_4$ | - | - | 2.0 | 0.3 | - | - | 82 | 130 |
| Example 214 | Solid | 3.0 | 3.0 | 99.1 | $LiFePO_4$ | - | - | 2.0 | 0.5 | - | - | 83 | 133 |
| Example 215 | Solid | 3.0 | 3.0 | 99.1 | $LiFePO_4$ | - | - | 2.0 | 1.0 | - | - | 82 | 131 |
| Example 216 | Solid | 3.0 | 3.0 | 99.1 | $LiFePO_4$ | - | - | 2.0 | 1.2 | - | - | 78 | 128 |
| Example 199 | Solid | 3.0 | 3.0 | 99.1 | $LiFePO_4$ | - | - | 3.0 | - | - | - | 77 | 120 |
| Example 217 | Solid | 3.0 | 3.0 | 99.1 | $LiFePO_4$ | - | - | 3.0 | 0.1 | - | - | 78 | 123 |
| Example 218 | Solid | 3.0 | 3.0 | 99.1 | $LiFePO_4$ | - | - | 3.0 | 0.3 | - | - | 82 | 130 |
| Example 219 | Solid | 3.0 | 3.0 | 99.1 | $LiFePO_4$ | - | - | 3.0 | 0.5 | - | - | 83 | 132 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 220 | Solid | 3.0 | 3.0 | 99.1 | $LiFePO_4$ | - | - | 3.0 | 1.0 | - | - | 82 | 131 |
| Example 221 | Solid | 3.0 | 3.0 | 99.1 | $LiFePO_4$ | - | - | 3.0 | 1.2 | - | - | 78 | 127 |
| Example 200 | Solid | 3.0 | 3.0 | 99.1 | $LiFePO_4$ | - | - | 3.5 | - | - | - | 76 | 119 |
| Example 222 | Solid | 3.0 | 3.0 | 99.1 | $LiFePO_4$ | - | - | 3.5 | 0.1 | - | - | 77 | 122 |
| Example 223 | Solid | 3.0 | 3.0 | 99.1 | $LiFePO_4$ | - | - | 3.5 | 0.3 | - | - | 81 | 129 |
| Example 224 | Solid | 3.0 | 3.0 | 99.1 | $LiFePO_4$ | - | - | 3.5 | 0.5 | - | - | 82 | 131 |
| Example 225 | Solid | 3.0 | 3.0 | 99.1 | $LiFePO_4$ | - | - | 3.5 | 1.0 | - | - | 81 | 130 |
| Example 226 | Solid | 3.0 | 3.0 | 99.1 | $LiFePO_4$ | - | - | 3.5 | 1.2 | - | - | **77** | 127 |
| Example 201 | Solid | 3.0 | 3.0 | 99.1 | $LiFePO_4$ | - | - | 4.0 | - | - | - | 74 | 117 |
| Example 227 | Solid | 3.0 | 3.0 | 99.1 | $LiFePO_4$ | - | - | 4.0 | 0.1 | - | - | 76 | 118 |
| Example 228 | Solid | 3.0 | 3.0 | 99.1 | $LiFePO_4$ | - | - | 4.0 | 0.3 | - | - | 77 | 123 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 229 | Solid | 3.0 | 3.0 | 99.1 | $LiFePO_4$ | - | - | 4.0 | 0.5 | - | - | 78 | 126 |
| Example 230 | Solid | 3.0 | 3.0 | 99.1 | $LiFePO_4$ | - | - | 4.0 | 1.0 | - | - | 78 | 123 |
| Example 231 | Solid | 3.0 | 3.0 | 99.1 | $LiFePO_4$ | - | - | 4.0 | 1.2 | - | - | 76 | 121 |

[Table 10]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 197 | Solid | 3.0 | 3.0 | 99.1 | $LiFePO_4$ | - | - | 0.5 | - | - | - | 71 | 115 |
| Example 232 | Solid | 3.0 | 3.0 | 99.1 | $LiFePO_4$ | - | - | 0.5 | - | 0.1 | - | 73 | 103 |
| Example 233 | Solid | 3.0 | 3.0 | 99.1 | $LiFePO_4$ | - | - | 0.5 | - | 0.3 | - | 76 | 108 |
| Example 234 | Solid | 3.0 | 3.0 | 99.1 | $LiFePO_4$ | - | - | 0.5 | - | 0.5 | - | 77 | 109 |
| Example 235 | Solid | 3.0 | 3.0 | 99.1 | $LiFePO_4$ | - | - | 0.5 | - | 1.0 | - | 77 | 109 |
| Example 236 | Solid | 3.0 | 3.0 | 99.1 | $LiFePO_4$ | - | - | 0.5 | - | 1.2 | - | 74 | 103 |
| Example 198 | Solid | 3.0 | 3.0 | 99.1 | $LiFePO_4$ | - | - | 1.0 | - | - | - | 75 | 119 |
| Example 237 | Solid | 3.0 | 3.0 | 99.1 | $LiFePO_4$ | - | - | 1.0 | - | 0.1 | - | 76 | 113 |
| Example 238 | Solid | 3.0 | 3.0 | 99.1 | $LiFePO_4$ | - | - | 1.0 | - | 0.3 | - | 81 | 120 |
| Example 239 | Solid | 3.0 | 3.0 | 99.1 | $LiFePO_4$ | - | - | 1.0 | - | 0.5 | - | 82 | 123 |
| Example 240 | Solid | 3.0 | 3.0 | 99.1 | $LiFePO_4$ | - | - | 1.0 | - | 1.0 | - | 81 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 241 | Solid | 3.0 | 3.0 | 99.1 | $LiFePO_4$ | - | - | 1.0 | - | 1.2 | - | 77 | 115 |
| Example 3 | Solid | 3.0 | 3.0 | 99.1 | $LiFePO_4$ | - | - | 2.0 | - | - | - | 77 | 120 |
| Example 212 | Solid | 3.0 | 3.0 | 99.1 | $LiFePO_4$ | - | - | 2.0 | - | 0.1 | - | 80 | 113 |
| Example 243 | Solid | 3.0 | 3.0 | 99.1 | $LiFePO_4$ | - | - | 2.0 | - | 0.3 | - | 84 | 120 |
| Example 244 | Solid | 3.0 | 3.0 | 99.1 | $LiFePO_4$ | - | - | 2.0 | - | 0.5 | - | 85 | 123 |
| Example 245 | Solid | 3.0 | 3.0 | 99.1 | $LiFePO_4$ | - | - | 2.0 | - | 1.0 | - | 84 | 121 |
| Example 246 | Solid | 3.0 | 3.0 | 99.1 | $LiFePO_4$ | - | - | 2.0 | - | 1.2 | - | 80 | 115 |
| Example 199 | Solid | 3.0 | 3.0 | 99.1 | $LiFePO_4$ | - | - | 3.0 | - | - | - | 77 | 120 |
| Example 247 | Solid | 3.0 | 3.0 | 99.1 | $LiFePO_4$ | - | - | 3.0 | - | 0.1 | - | 80 | 113 |
| Example 248 | Solid | 3.0 | 3.0 | 99.1 | $LiFePO_4$ | - | - | 3.0 | - | 0.3 | - | 84 | 120 |
| Example 249 | Solid | 3.0 | 3.0 | 99.1 | $LiFePO_4$ | - | - | 3.0 | - | 0.5 | - | 85 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 250 | Solid | 3.0 | 3.0 | 99.1 | $LiFePO_4$ | - | - | 3.0 | - | 1.0 | - | 84 | 121 |
| Example 251 | Solid | 3.0 | 3.0 | 99.1 | $LiFePO_4$ | - | - | 3.0 | - | 1.2 | - | 80 | 115 |
| Example 200 | Solid | 3.0 | 3.0 | 99.1 | $LiFePO_4$ | - | - | 3.5 | - | - | - | 76 | 119 |
| Example 252 | Solid | 3.0 | 3.0 | 99.1 | $LiFePO_4$ | - | - | 3.5 | - | 0.1 | - | 79 | 112 |
| Example 253 | Solid | 3.0 | 3.0 | 99.1 | $LiFePO_4$ | - | - | 3.5 | - | 0.3 | - | 83 | 120 |
| Example 254 | Solid | 3.0 | 3.0 | 99.1 | $LiFePO_4$ | - | - | 3.5 | - | 0.5 | - | 84 | 121 |
| Example 255 | Solid | 3.0 | 3.0 | 99.1 | $LiFePO_4$ | - | - | 3.5 | - | 1.0 | - | 83 | 120 |
| Example 256 | Solid | 3.0 | 3.0 | 99.1 | $LiFePO_4$ | - | - | 3.5 | - | 1.2 | - | 79 | 115 |
| Example 201 | Solid | 3.0 | 3.0 | 99.1 | $LiFePO_4$ | - | - | 4.0 | - | - | - | 74 | 117 |
| Example 257 | Solid | 3.0 | 3.0 | 99.1 | $LiFePO_4$ | - | - | 4.0 | - | 0.1 | - | 77 | 108 |
| Example 258 | Solid | 3.0 | 3.0 | 99.1 | $LiFePO_4$ | - | - | 4.0 | - | 0.3 | - | 79 | 113 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 259 | Solid | 3.0 | 3.0 | 99.1 | $LiFePO_4$ | - | - | 4.0 | - | 0.5 | - | 80 | 116 |
| Example 260 | Solid | 3.0 | 3.0 | 99.1 | $LiFePO_4$ | - | - | 4.0 | - | 1.0 | - | 80 | 113 |
| Example 261 | Solid | 3.0 | 3.0 | 99.1 | $LiFePO_4$ | - | - | 4.0 | - | 1.2 | - | 78 | 108 |

[Table 11]

| | Negative active material (graphite) | | | | Positive active material | Additive for nonaqueous electrolyte | | | | | | Evaluation | |
|---|---|---|---|---|---|---|---|---|---|---|---|---|---|
| | Structure | Aspect ratio | Median diameter ($D_{50}$) [μm] | Area ratio [%] | Type | Imide salt containing phosphorus or sulfur | | | Oxalate complex salt | | | Capacity retention rate after cycles [%] | Initial low-temperature input performance [W] |
| | | | | | | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | | |
| Example 197 | Solid | 3.0 | 3.0 | 99.1 | $LiFePO_4$ | - | - | 0.5 | - | - | - | 71 | 115 |
| Example 262 | Solid | 3.0 | 3.0 | 99.1 | $LiFePO_4$ | - | - | 0.5 | - | - | 0.1 | 73 | 101 |
| Example 263 | Solid | 3.0 | 3.0 | 99.1 | $LiFePO_4$ | - | - | 0.5 | - | - | 0.3 | 76 | 106 |
| Example 264 | Solid | 3.0 | 3.0 | 99.1 | $LiFePO_4$ | - | - | 0.5 | - | - | 0.5 | 77 | 107 |
| Example 265 | Solid | 3.0 | 3.0 | 99.1 | $LiFePO_4$ | - | - | 0.5 | - | - | 1.0 | 77 | 107 |
| Example 266 | Solid | 3.0 | 3.0 | 99.1 | $LiFePO_4$ | - | - | 0.5 | - | - | 1.2 | 74 | 101 |
| Example 198 | Solid | 3.0 | 3.0 | 99.1 | $LiFePO_4$ | - | - | 1.0 | - | - | - | 75 | 119 |
| Example 267 | Solid | 3.0 | 3.0 | 99.1 | $LiFePO_4$ | - | - | 1.0 | - | - | 0.1 | 76 | 110 |
| Example 268 | Solid | 3.0 | 3.0 | 99.1 | $LiFePO_4$ | - | - | 1.0 | - | - | 0.3 | 81 | 121 |
| Example 269 | Solid | 3.0 | 3.0 | 99.1 | $LiFePO_4$ | - | - | 1.0 | - | - | 0.5 | 83 | 122 |
| Example 270 | Solid | 3.0 | 3.0 | 99.1 | $LiFePO_4$ | - | - | 1.0 | - | - | 1.0 | 82 | 121 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 271 | Solid | 3.0 | 3.0 | 99.1 | $LiFePO_4$ | - | - | 1.0 | - | - | 1.2 | 77 | 113 |
| Example 3 | Solid | 3.0 | 3.0 | 99.1 | $LiFePO_4$ | - | - | 2.0 | - | - | - | 77 | 120 |
| Example 272 | Solid | 3.0 | 3.0 | 99.1 | $LiFePO_4$ | - | - | 2.0 | - | - | 0.1 | 80 | 110 |
| Example 273 | Solid | 3.0 | 3.0 | 99.1 | $LiFePO_4$ | - | - | 2.0 | - | - | 0.3 | 85 | 121 |
| Example 274 | Solid | 3.0 | 3.0 | 99.1 | $LiFePO_4$ | - | - | 2.0 | - | - | 0.5 | 86 | 122 |
| Example 275 | Solid | 3.0 | 3.0 | 99.1 | $LiFePO_4$ | - | - | 2.0 | - | - | 1.0 | 85 | 121 |
| Example 276 | Solid | 3.0 | 3.0 | 99.1 | $LiFePO_4$ | - | - | 2.0 | - | - | 1.2 | 80 | 113 |
| Example 199 | Solid | 3.0 | 3.0 | 99.1 | $LiFePO_4$ | - | - | 3.0 | - | - | - | 77 | 120 |
| Example 277 | Solid | 3.0 | 3.0 | 99.1 | $LiFePO_4$ | - | - | 3.0 | - | - | 0.1 | 80 | 112 |
| Example 278 | Solid | 3.0 | 3.0 | 99.1 | $LiFePO_4$ | - | - | 3.0 | - | - | 0.3 | 85 | 121 |
| Example 279 | Solid | 3.0 | 3.0 | 99.1 | $LiFePO_4$ | - | - | 3.0 | - | - | 0.5 | 86 | 122 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 280 | Solid | 3.0 | 3.0 | 99.1 | $LiFePO_4$ | - | - | 3.0 | - | - | 1.0 | 85 | 121 |
| Example 281 | Solid | 3.0 | 3.0 | 99.1 | $LiFePO_4$ | - | - | 3.0 | - | - | 1.2 | 80 | 114 |
| Example 200 | Solid | 3.0 | 3.0 | 99.1 | $LiFePO_4$ | - | - | 3.5 | - | - | - | 76 | 119 |
| Example 282 | Solid | 3.0 | 3.0 | 99.1 | $LiFePO_4$ | - | - | 3.5 | - | - | 0.1 | 79 | 111 |
| Example 283 | Solid | 3.0 | 3.0 | 99.1 | $LiFePO_4$ | - | - | 3.5 | - | - | 0.3 | **84** | 120 |
| Example 284 | Solid | 3.0 | 3.0 | 99.1 | $LiFePO_4$ | - | - | 3.5 | - | - | 0.5 | 85 | 121 |
| Example 285 | Solid | 3.0 | 3.0 | 99.1 | $LiFePO_4$ | - | - | 3.5 | - | - | 1.0 | 85 | 121 |
| Example 286 | Solid | 3.0 | 3.0 | 99.1 | $LiFePO_4$ | - | - | 3.5 | - | - | 1.2 | 79 | 113 |
| Example 201 | Solid | 3.0 | 3.0 | 99.1 | $LiFePO_4$ | - | - | 4.0 | - | - | - | 74 | 117 |
| Example 287 | Solid | 3.0 | 3.0 | 99.1 | $LiFePO_4$ | - | - | 4.0 | - | - | 0.1 | 77 | 107 |
| Example 288 | Solid | 3.0 | 3.0 | 99.1 | $LiFePO_4$ | - | - | 4.0 | - | - | 0.3 | 80 | 110 |

(continued)

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 289 | Solid | 3.0 | 3.0 | 99.1 | $LiFePO_4$ | - | - | 4.0 | - | - | 0.5 | 81 | 113 |
| Example 290 | Solid | 3.0 | 3.0 | 99.1 | $LiFePO_4$ | - | - | 4.0 | - | - | 1.0 | 81 | 110 |
| Example 291 | Solid | 3.0 | 3.0 | 99.1 | $LiFePO_4$ | - | - | 4.0 | - | - | 1.2 | 78 | 105 |

As shown in Tables 2 to 11, in Examples and Comparative Examples, when the content of the imide salt containing phosphorus or sulfur in the nonaqueous electrolyte was changed, the capacity retention rate after the charge-discharge cycles and the initial low-temperature input performance were improved, but when the content exceeded a certain amount, the capacity retention rate after the charge-discharge cycles and the initial low-temperature input performance decreased. From the viewpoint of improving the capacity retention rate after the charge-discharge cycles and the initial low-temperature input performance, it is found that the content of the imide salt is preferably 1.0 mass% or more and 3.5 mass% or less.

In addition, as a tendency when the oxalate complex salt was further contained in the nonaqueous electrolyte, the capacity retention rate after the charge-discharge cycles was further improved. When the content of the oxalate complex salt exceeded a certain amount, the capacity retention rate after the charge-discharge cycles decreased. Further, when the imide salt containing phosphorus or sulfur and the oxalate complex salt are used in combination in the nonaqueous electrolyte, it is found that the content of the imide salt is particularly preferably 1.0 mass% or more and 3.5 mass% or less, and the content of the oxalate complex salt is particularly preferably 0.30 mass% or more and 1.00 mass% or less.

As shown in Tables 3 to 5, for the oxalate complex salt, when the nonaqueous electrolyte contained boron-containing compound 4 and compound 5, the capacity retention rate after the charge-discharge cycles and the initial low-temperature input performance were improved, but when the nonaqueous electrolyte contained boron-free compound 6, only the capacity retention rate after the charge-discharge cycles was improved. Furthermore, it was shown that the content of the oxalate complex salt is preferably 0.30 mass% or more and 1.00 mass% or less.

Next, Table 12 below shows the evaluation results when the positive active material was changed in Examples and Comparative Examples.

[Table 12]

| | Negative active material (graphite) | | | | Positive active material | Additive for nonaqueous electrolyte | | | | | | Evaluation | |
|---|---|---|---|---|---|---|---|---|---|---|---|---|---|
| | | | | | | Imide salt containing phosphorus or sulfur | | | Oxalate complex salt | | | | |
| | Structure | Aspect ratio | Median diameter ($D_{50}$) [μm] | Area ratio [%] | Type | Compound 1 LIFSPI [mass%] | Compound 2 LIFSI [mass%] | Compound 3 LITFSI [mass%] | Compound 4 LIFOB [mass%] | Compound 5 LIBOB [mass%] | Compound 6 LIPF4(Ox) [mass%] | Capacity retention rate after cycles [%] | Initial low-temperature input performance [W] |
| Example 24 | Solid | 3.0 | 3.0 | 99.1 | $LiFePO_4$ | 2.0 | - | - | 0.5 | - | - | 84 | 135 |
| Example 292 | Solid | 3.0 | 3.0 | 99.1 | $LiNi_{1/3}Co_{1/3}Mn_{1/3}O_2$ | 2.0 | - | - | 0.5 | - | - | 75 | 117 |
| Example 293 | Solid | 3.0 | 3.0 | 99.1 | $LiNi_{0.6}Co_{0.2}Mn_{0.2}O_2$ | 2.0 | - | - | 0.5 | - | - | 74 | 106 |
| Example 294 | Solid | 3.0 | 3.0 | 99.1 | $LiNi_{0.5}Co_{0.2}Mn_{0.3}O_2$ | 2.0 | - | - | 0.5 | - | - | 73 | 120 |
| Example 1 | Solid | 3.0 | 3.0 | 99.1 | $LiFePO_4$ | 2.0 | - | - | | - | - | 79 | 122 |
| Example 1 Comparative Example 1 | Solid | 3.0 | 3.0 | 99.1 | $LiFePO_4$ | - | - | - | - | - | - | 66 | 83 |
| Example 295 | Solid | 3.0 | 3.0 | 99.1 | $LiNi_{1/3}Co_{1/3}Mn_{1/3}O_2$ | 2.0 | - | - | - | - | - | 73 | 112 |
| Comparative Example 7 | Solid | 3.0 | 3.0 | 99.1 | $LiNi_{1/3}Co_{1/3}Mn_{1/3}O_2$ | - | - | - | - | - | - | 69 | 83 |
| Example 7 Comparative Example 8 | Hollow | 1.6 | 8.8 | 88.8 | $LiNi_{1/3}Co_{1/3}Mn_{1/3}O_2$ | 2.0 | - | - | - | - | - | 66 | 134 |

As shown in Table 12, in both the case where LFP was used as the positive active material and the case where NCM was used, the capacity retention rate after charge-discharge cycles was excellent in Examples where the negative active material contained solid graphite particles having an aspect ratio of 1 to 5 as the main component, and the nonaqueous electrolyte contained the imide salt containing phosphorus or sulfur as the negative active material. In addition, it is found that when LFP is used as the positive active material, the effect of improving the capacity retention rate after the charge-discharge cycles is higher than that when NCM is used.

As described above, it was shown that the energy storage device has an excellent capacity retention rate after the charge-discharge cycles, even when graphite is used as the negative active material.

INDUSTRIAL APPLICABILITY

The present invention is suitably used as an energy storage device including a nonaqueous electrolyte secondary battery used as a power source for electronic devices such as personal computers and communication terminals, automobiles, and the like.

DESCRIPTION OF REFERENCE SIGNS

1: energy storage device
2: electrode assembly
3: case
4: positive electrode terminal
4': positive current collector
5: negative electrode terminal
5': negative current collector
6: lid
20: energy storage unit
30: energy storage apparatus

## Claims

**1.** An energy storage device comprising:

a negative electrode containing a negative active material;
a positive electrode containing a positive active material; and
a nonaqueous electrolyte
wherein
the negative active material contains solid graphite particles with an aspect ratio of 1 to 5 as a main component, wherein the aspect ratio means an A/B value that is the ratio of a longest diameter A of the particle to a diameter B which is the thickest portion in the direction perpendicular to the diameter A in the cross section of the particle observed in the SEM image by the scanning electron microscope, and
the nonaqueous electrolyte contains an imide salt containing phosphorus or sulfur,
the solid graphite particles mean graphite particles in which an area ratio R, excluding voids in the particles, is 95% or more relative to the total area of the particles in the cross section of the particles observed in a SEM image obtained by using a scanning electron microscope, wherein the area ratio R is determined according to the present description.

**2.** The energy storage device according to claim 1, wherein the imide salt has a phosphonyl group, a sulfonyl group, or a combination of the groups.

**3.** The energy storage device according to claim 1 or 2, wherein a content of the imide salt in the nonaqueous electrolyte is 1.0 mass% or more and 3.5 mass% or less.

**4.** The energy storage device according to claim 1, 2 or 3, wherein the nonaqueous electrolyte further contains an oxalate complex salt.

5. The energy storage device according to claim 4, wherein the oxalate complex salt contains boron.

6. The energy storage device according to any one of claims 1 to 5, wherein the positive active material contains lithium iron phosphate.

7. A method for manufacturing an energy storage device, the method comprising

housing, into a case, a negative electrode that contains a negative active material having solid graphite particles with an aspect ratio of 1 to 5, wherein the aspect ratio means an A/B value that is the ratio of a longest diameter A of the particle to a diameter B which is the thickest portion in the direction perpendicular to the diameter A in the cross section of the particle observed in the SEM image by the scanning electron microscope, a positive electrode containing a positive active material, and a nonaqueous electrolyte that contains an imide salt containing phosphorus or sulfur,
the solid graphite particles mean graphite particles in which an area ratio R, excluding voids in the particles, is 95% or more relative to the total area of the particles in the cross section of the particles observed in a SEM image obtained by using a scanning electron microscope.

**Patentansprüche**

1. Energiespeichervorrichtung, umfassend:

eine negative Elektrode, die ein negatives Aktivmaterial enthält;
eine positive Elektrode, die ein positives Aktivmaterial enthält; und
einen nichtwässrigen Elektrolyten,
wobei
das negative Aktivmaterial als Hauptkomponente feste Graphitteilchen mit einem Aspektverhältnis von 1 bis 5 enthält, wobei das Aspektverhältnis einen A/B-Wert bezeichnet, der das Verhältnis eines längsten Durchmessers A des Teilchens zu einem Durchmesser B ist, der der dickste Abschnitt in der Richtung senkrecht zu dem Durchmesser A im Querschnitt des Teilchens ist, beobachtet in dem SEM-Bild durch das Rasterelektronenmikroskop, und
der nichtwässrige Elektrolyt ein Imidsalz enthält, das Phosphor oder Schwefel enthält,
die festen Graphitteilchen Graphitteilchen bezeichnen, bei denen das Flächenverhältnis R, ohne Hohlräume in den Teilchen, 95 % oder mehr der Gesamtfläche der Teilchen im Querschnitt der Teilchen beträgt, beobachtet in einem SEM-Bild, das unter Verwendung eines Rasterelektronenmikroskops erhalten wurde,
wobei das Flächenverhältnis R gemäß der vorliegenden Beschreibung bestimmt wird.

2. Energiespeichervorrichtung nach Anspruch 1, wobei das Imidsalz eine Phosphonylgruppe, eine Sulfonylgruppe oder eine Kombination der Gruppen aufweist.

3. Energiespeichervorrichtung nach Anspruch 1 oder 2, wobei ein Gehalt an Imidsalz in dem nichtwässrigen Elektrolyten 1,0 Massenprozent oder mehr und 3,5 Massenprozent oder weniger beträgt.

4. Energiespeichervorrichtung nach Anspruch 1, 2 oder 3, wobei der nichtwässrige Elektrolyt ferner ein Oxalatkomplexsalz enthält.

5. Energiespeichervorrichtung nach Anspruch 4, wobei das Oxalatkomplexsalz Bor enthält.

6. Energiespeichervorrichtung nach einem der Ansprüche 1 bis 5, wobei das positive Aktivmaterial Lithiumeisenphosphat enthält.

7. Verfahren zum Herstellen einer Energiespeichervorrichtung nach, wobei das Verfahren umfasst:

Aufnehmen, in ein Gehäuse, einer negativen Elektrode, die ein negatives Aktivmaterial mit festen Graphitteilchen mit einem Aspektverhältnis von 1 bis 5 enthält, wobei das Aspektverhältnis einen A/B-Wert bezeichnet, der das Verhältnis eines längsten Durchmessers A des Teilchens zu einem Durchmesser B ist, der den dicksten Abschnitt in der Richtung senkrecht zu dem Durchmesser A in dem Querschnitt des Teilchens darstellt, beobachtet in dem SEM-Bild durch das Rasterelektronenmikroskop, einer positiven Elektrode, die ein positives Aktivmaterial

enthält, und eines nichtwässrigen Elektrolyten, der ein Imidsalz enthält, das Phosphor oder Schwefel enthält, wobei die festen Graphitteilchen Graphitteilchen bezeichnen, bei denen das Flächenverhältnis R, ohne Hohlräume in den Teilchen, 95 % oder mehr der Gesamtfläche der Teilchen im Querschnitt der Teilchen beträgt, beobachtet in einem SEM-Bild, das unter Verwendung eines Rasterelektronenmikroskops erhalten wurde.

## Revendications

**1.** Appareil de stockage d'énergie comprenant :

une électrode négative contenant un matériau actif négatif ;
une électrode positive contenant un matériau actif positif ; et
un électrolyte non aqueux
dans lequel
le matériau actif négatif contient, en tant que composant principal, des particules de graphite solides ayant un rapport de forme de 1 à 5, le rapport de forme signifiant une valeur A/B qui est le rapport d'un diamètre le plus long A de la particule à un diamètre B qui est la partie la plus épaisse dans la direction perpendiculaire au diamètre A dans la section transversale de la particule observée dans l'image MEB par le microscope électronique à balayage, et
l'électrolyte non aqueux contient un sel d'imide contenant du phosphore ou du soufre,
les particules de graphite solides signifient des particules de graphite dans lesquelles un rapport de surface R, à l'exclusion des vides dans les particules, est égal ou supérieur à 95 % par rapport à la surface totale des particules dans la section transversale des particules observées dans une image MEB obtenue au moyen d'un microscope électronique à balayage,
le rapport de surface R étant déterminé selon la présente description.

**2.** Appareil de stockage d'énergie selon la revendication 1, dans lequel le sel d'imide présente un groupement phosphonyle, un groupement sulfonyle ou une combinaison des groupements.

**3.** Appareil de stockage d'énergie selon la revendication 1 ou 2, dans lequel la teneur en sel d'imide dans l'électrolyte non aqueux est égale ou supérieure à 1,0 pourcent en masse et égale ou inférieure à 3,5 pourcent en masse.

**4.** Appareil de stockage d'énergie selon la revendication 1, 2 ou 3, dans lequel l'électrolyte non aqueux contient en outre un sel complexe d'oxalate.

**5.** Appareil de stockage d'énergie selon la revendication 4, dans lequel le sel complexe d'oxalate contient du bore.

**6.** Dispositif de stockage d'énergie selon l'une quelconque des revendications 1 à 5, dans lequel le matériau actif positif contient du lithium-fer-phosphate.

**7.** Procédé de fabrication d'un appareil de stockage d'énergie, le procédé comprenant

le logement, dans un boîtier, d'une électrode négative qui contient un matériau actif négatif présentant des particules de graphite solides ayant un rapport de forme de 1 à 5, le rapport de forme signifiant une valeur A/B qui est le rapport d'un diamètre le plus long A de la particule à un diamètre B qui est la partie la plus épaisse dans la direction perpendiculaire au diamètre A dans la section transversale de la particule observée dans l'image MEB par le microscope électronique à balayage, d'une électrode positive contenant un matériau actif positif, et d'un électrolyte non aqueux qui contient un sel d'imide contenant du phosphore ou du soufre,
les particules de graphite solides signifiant des particules de graphite dans lesquelles un rapport de surface R, à l'exclusion des vides dans les particules, est égal ou supérieur à 95 % par rapport à la surface totale des particules dans la section transversale des particules observées dans une image MEB obtenue au moyen d'un microscope électronique à balayage.

Fig. 1

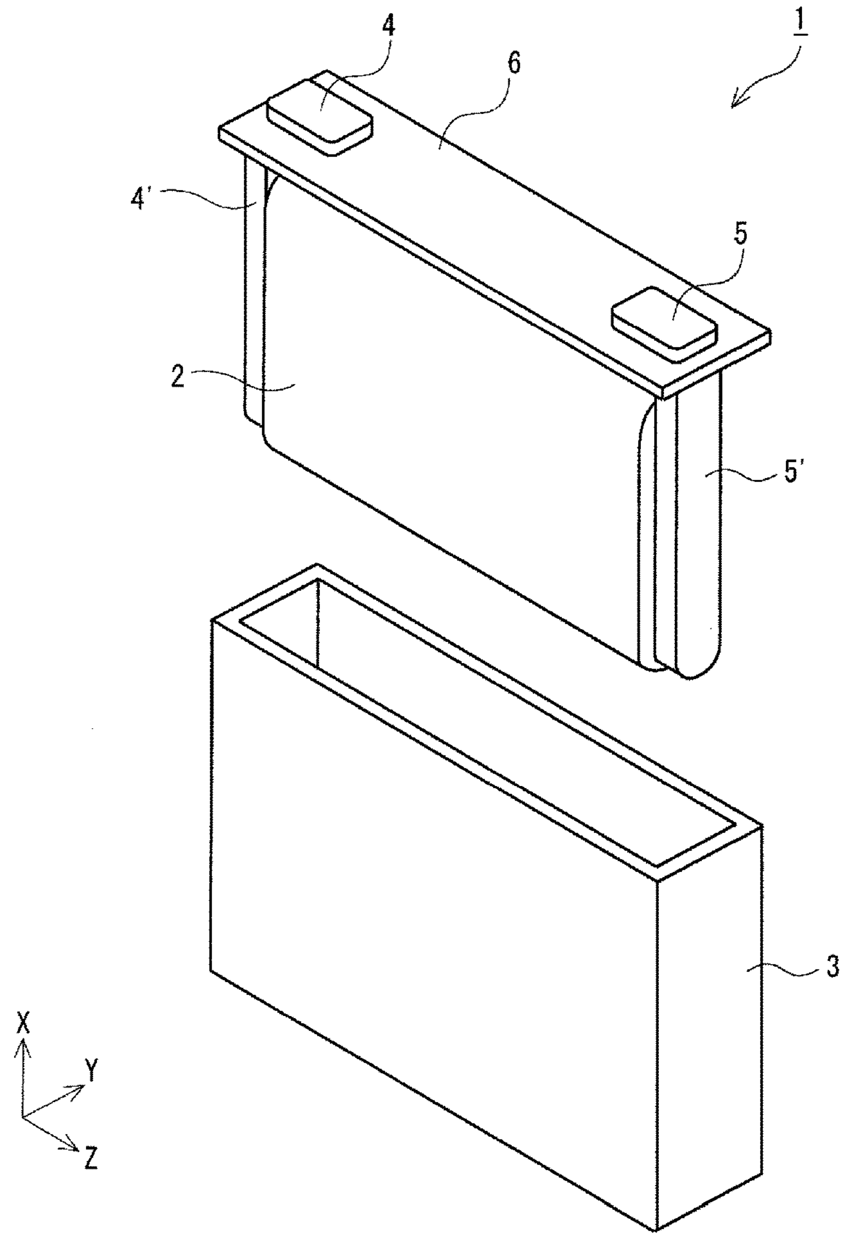

Fig. 2

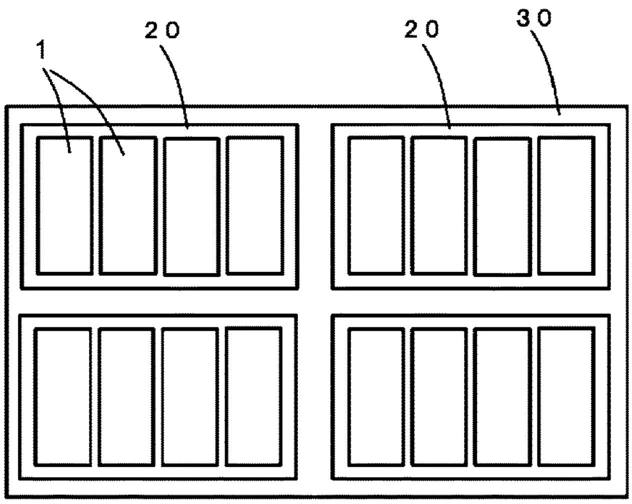

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005222933 A
- KR 20170048210 A